(19) Europäisches Patentamt
European Patent Office
Office européen des brevets

(11) **EP 4 109 343 A1**

(12) **EUROPEAN PATENT APPLICATION**
published in accordance with Art. 153(4) EPC

(43) Date of publication:
**28.12.2022 Bulletin 2022/52**

(51) International Patent Classification (IPC):
***G06N 3/04*** *(2006.01)*

(21) Application number: **21757765.9**

(86) International application number:
**PCT/CN2021/076984**

(22) Date of filing: **20.02.2021**

(87) International publication number:
**WO 2021/164751 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.02.2020 CN 202010109254**

(71) Applicant: **Huawei Technologies Co., Ltd.**
**Shenzhen, Guangdong 518129, (CN)**

(72) Inventors:
• **HAN, Kai**
**Shenzhen, Guangdong 518129 (CN)**
• **GUO, Jianyuan**
**Shenzhen, Guangdong 518129 (CN)**
• **WANG, Yunhe**
**Shenzhen, Guangdong 518129 (CN)**
• **CHEN, Xinghao**
**Shenzhen, Guangdong 518129 (CN)**
• **NIE, Ying**
**Shenzhen, Guangdong 518129 (CN)**
• **XU, Yixing**
**Shenzhen, Guangdong 518129 (CN)**
• **XU, Chunjing**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **PERCEPTION NETWORK ARCHITECTURE SEARCH METHOD AND DEVICE**

(57) A perception network architecture search method relates to the field of artificial intelligence and includes: obtaining a to-be-searched perception network and a target search space, where the to-be-searched perception network includes a backbone network and a header (header), the backbone network is connected to the header, the backbone network includes a first convolutional layer, the header includes a third convolutional layer, and the target search space includes a plurality of operation types (901); and performing architecture search for the first convolutional layer in the target search space, performing architecture search for a second convolutional layer in the target search space, and performing architecture search for the third convolutional layer in the target search space, to obtain a found perception network (902). In this application, performance of the perception network obtained after architecture search is better.

Obtain a to-be-searched perception network and a target search space, where the to-be-searched perception network includes a backbone network, a feature pyramid network FPN, and a header (header), the backbone network is connected to the FPN, the FPN is connected to the header, the backbone network includes a first convolutional layer, the FPN includes a second convolutional layer, the header includes a third convolutional layer, and the target search space includes a plurality of operation types — 901

Perform architecture search for the first convolutional layer in the target search space, perform architecture search for the second convolutional layer in the target search space, and perform architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types — 902

FIG. 9

## Description

This application claims priority to Chinese Patent Application No. 202010109254.2, filed with the China National Intellectual Property Administration on February 21, 2020 and entitled "PERCEPTION NETWORK ARCHITECTURE SEARCH METHOD AND APPARATUS FOR SAME", which is incorporated herein by reference in its entirety.

## TECHNICAL FIELD

This application relates to the field of artificial intelligence, and in particular, to a perception network architecture search method and apparatus for same.

## BACKGROUND

Computer vision is an integral part of various intelligent/autonomic systems in various application fields such as manufacturing, inspection, document analysis, medical diagnosis, and military affairs. Computer vision is knowledge about how to use a camera/video camera and a computer to obtain required data and information of a photographed subject. Figuratively, eyes (a camera or video camera) and a brain (an algorithm) are installed on a computer to identify, track, and measure objects in lieu of human eyes, so that the computer can perceive an environment. Perceiving may be considered as extracting information from a perceptual signal. Therefore, computer vision may also be considered as a science of studying how to make an artificial system perceive an image or multidimensional data. Generally, computer vision is to replace a visual organ with various imaging systems to obtain input information, and then replace a brain with a computer to process and interpret the input information. A final study objective of computer vision is to enable a computer to observe and understand the world through vision in a way that human beings do, and have a capability of automatically adapting to an environment.

Currently, a visual perception network can implement more functions, including image classification, 2D detection, semantic segmentation (Mask), key point detection, linear object detection (for example, lane line or stop line detection in an autonomous driving technology), drivable area detection, and the like. In addition, a visual perception system is cost-effective, non-contact, small in size, and informative. With continuous improvement in precision of a visual perception algorithm, the visual perception algorithm becomes a key technology of many artificial intelligence systems today, and is increasingly widely applied, for example, to recognizing a dynamic obstacle (a person or a vehicle) and a static object (a traffic light, a traffic sign, or a traffic cone) on a road by an advanced driver assistance system (advanced driving assistant system, ADAS) and an autonomous driving system (autonomous driving system, ADS). In a photographing beautification function of terminal vision, body shaping effect and the like are implemented by identifying a mask and a key point of a human body.

With rapid development of artificial intelligence technologies, a neural network with excellent performance usually has a delicate network architecture, and experts with high skills and rich experience need to make great efforts to construct the neural network. A neural architecture search (neural architecture search, NAS) method is proposed to better construct a neural network, and automatic search is performed on neural network architectures, to obtain a neural network architecture with excellent performance.

However, for a visual perception network, a conventional solution is to perform separate architecture search for a part of the visual perception network, and therefore a finally established perception network may not well meet an application requirement.

## SUMMARY

According to a first aspect, this application provides a perception network architecture search method, including:

obtaining a to-be-searched perception network and a target search space, where the to-be-searched perception network includes a backbone network, a feature pyramid network FPN, and a header (header), the backbone network is connected to the FPN, the FPN is connected to the header, the backbone network includes a first convolutional layer, the FPN includes a second convolutional layer, the header includes a third convolutional layer, and the target search space includes a plurality of operation (operation) types;

performing architecture search for the first convolutional layer in the target search space, performing architecture search for the second convolutional layer in the target search space, and performing architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types.

Optionally, in a design of the first aspect, the performing architecture search for the first convolutional layer in the target search space includes: obtaining a first sub-search space corresponding to the first convolutional layer, where the first sub-search space includes a part or all of the plurality of operation types; and performing architecture search for the first convolutional layer in the first sub-search space, to obtain the first operation type corresponding to the first convolutional layer, where the first operation type is one of operation types included in the first sub-search space; and/or

the performing architecture search for the second convolutional layer in the target search space includes: obtaining a second sub-search space corresponding to the second convolutional layer, where the second sub-search space includes a part or all of the plurality of operation types; and performing architecture search for the second convolutional layer in the second sub-search space, to obtain the second operation type corresponding to the second convolutional layer, where the second operation type is one of operation types included in the second sub-search space; and/or the performing architecture search for the third convolutional layer in the target search space includes: obtaining a third sub-search space corresponding to the third convolutional layer, where the third sub-search space includes a part or all of the plurality of operation types; and performing architecture search for the third convolutional layer in the third sub-search space, to obtain the third operation type corresponding to the third convolutional layer, where the third operation type is one of operation types included in the third sub-search space.

Optionally, in a design of the first aspect, the obtaining a first sub-search space corresponding to the first convolutional layer includes:
obtaining a first weight value that is of each of the plurality of operation types included in the target search space and that corresponds to the first convolutional layer, where the first weight value indicates a capability of an operation type to affect an output result of the to-be-searched perception network; and obtaining, according to the first weight value corresponding to the first convolutional layer, the first sub-search space corresponding to the first convolutional layer from the target search space.

Optionally, in a design of the first aspect, the obtaining a first sub-search space corresponding to the first convolutional layer includes:
obtaining a second weight value that is of each of the plurality of operation types included in the target search space and that corresponds to the backbone network; and determining, according to the second weight value corresponding to the backbone network, the first sub-search space corresponding to the backbone network from the target search space, where the second weight value indicates a capability of an operation type to affect an output result of the to-be-searched perception network.

Optionally, in a design of the first aspect, the obtaining a second sub-search space corresponding to the second convolutional layer includes:
obtaining a second weight value that is of each of the plurality of operation types included in the target search space and that corresponds to the second convolutional layer; and obtaining, according to the first weight value corresponding to the second convolutional layer, the second sub-search space corresponding to the second convolutional layer from the target search space.

Optionally, in a design of the first aspect, the obtaining a second sub-search space corresponding to the second convolutional layer includes:
obtaining a second weight value that is of each of the plurality of operation types included in the target search space and that corresponds to the FPN; and determining, according to the corresponding second weight value, the second sub-search space corresponding to the FPN from the target search space.

Optionally, in a design of the first aspect, the obtaining a third sub-search space corresponding to the third convolutional layer includes:
obtaining a first weight value that is of each of the plurality of operation types included in the target search space and that corresponds to the third convolutional layer; and obtaining, according to the first weight value corresponding to the third convolutional layer, the third sub-search space corresponding to the third convolutional layer from the target search space.

Optionally, in a design of the first aspect, the obtaining a third sub-search space corresponding to the third convolutional layer includes:
obtaining a second weight value that is of each of the plurality of operation types included in the target search space and that corresponds to the header; and determining, according to the second weight value header corresponding to the header, the third sub-search space corresponding to the header from the target search space.

Optionally, in a design of the first aspect, the backbone network includes a plurality of convolutional layers, the first convolutional layer is one of the plurality of convolutional layers included in the backbone network, and the performing architecture search for the first convolutional layer in the target search space, performing architecture search for the second convolutional layer in the target search space, and performing architecture search for the third convolutional layer in the target search space includes:

performing architecture search for the to-be-searched perception network in the target search space, to determine an operation type corresponding to each convolutional layer in the plurality of convolutional layers included in the backbone network, the second operation type corresponding to the second convolutional layer, and the third operation type corresponding to the third convolutional layer.

Optionally, in a design of the first aspect, the FPN includes a plurality of convolutional layers, the second convolutional layer is one of the plurality of convolutional layers included in the FPN, and the performing architecture search for the first convolutional layer in the target search space, performing architecture search for the second convolutional layer in the target search space, and performing architecture search for the third convolutional layer in the target search space includes:

performing architecture search for the to-be-searched perception network in the target search space, to determine the first operation type corresponding to the first convolutional layer, an operation type corresponding to each convolutional layer in the plurality of convolutional layers included in the FPN, and the third operation type corresponding to the third convolutional layer.

Optionally, in a design of the first aspect, the header includes a plurality of convolutional layers, the third convolutional layer is one of the plurality of convolutional layers included in the header, and the performing architecture search for the first convolutional layer in the target search space, performing architecture search for the second convolutional layer in the target search space, and performing architecture search for the third convolutional layer in the target search space includes:

performing architecture search for the to-be-searched perception network in the target search space, to determine the first operation type corresponding to the first convolutional layer, the second operation type corresponding to the second convolutional layer, and an operation type corresponding to each of the plurality of convolutional layers included in the header.

Optionally, in a design of the first aspect, the method further includes:

receiving a first model indicator from a device side; and
the performing architecture search for the to-be-searched perception network in the target search space includes: performing architecture search for the to-be-searched perception network based on the first model indicator and a preset loss until the preset loss meets a preset condition, to obtain a found perception model, where the preset loss is related to a model indicator loss, the model indicator loss indicates a difference between a second model indicator of the to-be-searched perception network and the first model indicator, and the first model indicator and the second model indicator include at least one of the following: a model calculation amount FLOPs or a model parameter quantity Parameters.

Optionally, in a design of the first aspect, the method further includes:
sending the found perception model to the device side.

Optionally, in a design of the first aspect, the method further includes:

performing weight training on the found perception model, to obtain a trained perception model; and
sending the trained perception model to the terminal device.

According to a second aspect, this application provides a perception network architecture search method, including:

obtaining a to-be-searched perception network and a target search space, where the to-be-searched perception network includes a backbone network and a header (header), the backbone network is connected to the header, the backbone network includes a first convolutional layer, the header includes a third convolutional layer, and the target search space includes a plurality of operation types; and
performing architecture search for the first convolutional layer in the target search space, and performing architecture search for the third convolutional layer in the target search space, to obtain a found perception network, where a first convolutional layer included in the found perception network corresponds to a first operation type, a third convolutional layer included in the found perception network corresponds to a third operation type, and the first operation type and the third operation type are operation types in the plurality of operation types.

Optionally, in a design of the second aspect, the performing architecture search for the first convolutional layer in the target search space includes: obtaining a first sub-search space corresponding to the first convolutional layer, where the first sub-search space includes a part or all of the plurality of operation types; and performing architecture search for the first convolutional layer in the first sub-search space, to obtain the first operation type corresponding to the first convolutional layer, where the first operation type is one of operation types included in the first sub-search space; and/or

the performing architecture search for the third convolutional layer in the target search space includes: obtaining a third sub-search space corresponding to the third convolutional layer, where the third sub-search space includes a part or all of the plurality of operation types; and performing architecture search for the third convolutional layer in the third sub-search space, to obtain the third operation type corresponding to the third convolutional layer, where the third operation type is one of operation types included in the third sub-search space.

Optionally, in a design of the second aspect, the obtaining a first sub-search space corresponding to the first convolutional layer includes:

obtaining a first weight value that is of each of the plurality of operation types included in the target search space and that corresponds to the first convolutional layer, where the first weight value indicates a capability of an operation type to affect an output result of the to-be-searched perception network; and obtaining, according to the first weight value corresponding to the first convolutional layer, the first sub-search space corresponding to the first convolutional layer from the target search space.

Optionally, in a design of the second aspect, the obtaining a first sub-search space corresponding to the first convolutional layer includes:

obtaining a second weight value that is of each of the plurality of operation types included in the target search space and that corresponds to the backbone network; and determining, according to the second weight value corresponding to the backbone network, the first sub-search space corresponding to the backbone network from the target search space, where the second weight value indicates a capability of an operation type to affect an output result of the to-be-searched perception network.

Optionally, in a design of the second aspect, the obtaining a third sub-search space corresponding to the third convolutional layer includes:

obtaining a first weight value that is of each of the plurality of operation types included in the target search space and that corresponds to the third convolutional layer; and obtaining, according to the first weight value corresponding to the third convolutional layer, the third sub-search space corresponding to the third convolutional layer from the target search space.

Optionally, in a design of the second aspect, the obtaining a third sub-search space corresponding to the third convolutional layer includes:

obtaining a second weight value that is of each of the plurality of operation types included in the target search space and that corresponds to the header; and determining, according to the second weight value header corresponding to the header, the third sub-search space corresponding to the header from the target search space.

Optionally, in a design of the second aspect, the backbone network includes a plurality of convolutional layers, the first convolutional layer is one of the plurality of convolutional layers included in the backbone network, and the performing architecture search for the first convolutional layer in the target search space, and performing architecture search for the third convolutional layer in the target search space includes:

performing architecture search for the to-be-searched perception network in the target search space, to determine an operation type corresponding to each of the plurality of convolutional layers included in the backbone network, and the third operation type corresponding to the third convolutional layer.

Optionally, in a design of the second aspect, the header includes a plurality of convolutional layers, the third convolutional layer is one of the plurality of convolutional layers included in the header, and the performing architecture search for the first convolutional layer in the target search space, and performing architecture search for the third convolutional layer in the target search space includes:

performing architecture search for the to-be-searched perception network in the target search space, to determine the first operation type corresponding to the first convolutional layer, and an operation type corresponding to each of the plurality of convolutional layers included in the header.

Optionally, in a design of the second aspect, the method further includes:

receiving a first model indicator from a device side; and
the performing architecture search for the to-be-searched perception network in the target search space includes: performing architecture search for the to-be-searched perception network based on the first model indicator and a preset loss until the preset loss meets a preset condition, to obtain a found perception model, where the preset loss is related to a model indicator loss, the model indicator loss indicates a difference between a second model indicator of the to-be-searched perception network and the first model indicator, and the first model indicator and the second model indicator include at least one of the following: a model calculation amount FLOPs or a model parameter quantity Parameters.

Optionally, in a design of the second aspect, the method further includes:
sending the found perception model to the device side.

Optionally, in a design of the second aspect, the method further includes:

performing weight training on the found perception model, to obtain a trained perception model; and
sending the trained perception model to the terminal device.

According to a third aspect, this application provides a perception network architecture search apparatus, including:

an obtaining module, configured to obtain a to-be-searched perception network and a target search space, where the to-be-searched perception network includes a backbone network, a feature pyramid network FPN, and a header (header), the backbone network is connected to the FPN, the FPN is connected to the header, the backbone network includes a first convolutional layer, the FPN includes a second convolutional layer, the header includes a third convolutional layer, and the target search space includes a plurality of operation (operation) types; and
an architecture search module, configured to perform architecture search for the first convolutional layer in the target search space, perform architecture search for the second convolutional layer in the target search space, and perform architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types.

Optionally, in a design of the third aspect, the architecture search module is specifically configured to:

obtain a first sub-search space corresponding to the first convolutional layer, where the first sub-search space includes a part or all of the plurality of operation types; and perform architecture search for the first convolutional layer in the first sub-search space, to obtain the first operation type corresponding to the first convolutional layer, where the first operation type is one of operation types included in the first sub-search space; and/or
obtain a second sub-search space corresponding to the second convolutional layer, where the second sub-search space includes a part or all of the plurality of operation types; and perform architecture search for the second convolutional layer in the second sub-search space, to obtain the second operation type corresponding to the second convolutional layer, where the second operation type is one of operation types included in the second sub-search space; and/or
obtain a third sub-search space corresponding to the third convolutional layer, where the third sub-search space includes a part or all of the plurality of operation types; and perform architecture search for the third convolutional layer in the third sub-search space, to obtain the third operation type corresponding to the third convolutional layer, where the third operation type is one of operation types included in the third sub-search space.

Optionally, in a design of the third aspect, the architecture search module is specifically configured to:
obtain a first weight value that is of each of the plurality of operation types included in the target search space and that corresponds to the first convolutional layer, where the first weight value indicates a capability of an operation type to affect an output result of the to-be-searched perception network; and obtain, according to the first weight value corresponding to the first convolutional layer, the first sub-search space corresponding to the first convolutional layer from the target search space.

Optionally, in a design of the third aspect, the architecture search module is specifically configured to:
obtain a second weight value that is of each of the plurality of operation types included in the target search space and that corresponds to the backbone network; and determine, according to the second weight value corresponding to the backbone network, the first sub-search space corresponding to the backbone network from the target search space, where the second weight value indicates a capability of an operation type to affect an output result of the to-be-searched perception network.

Optionally, in a design of the third aspect, the architecture search module is specifically configured to:
obtain a second weight value that is of each of the plurality of operation types included in the target search space and that corresponds to the second convolutional layer; and obtain, according to the first weight value corresponding to the second convolutional layer, the second sub-search space corresponding to the second convolutional layer from the target search space.

Optionally, in a design of the third aspect, the architecture search module is specifically configured to:

obtain a second weight value that is of each of the plurality of operation types included in the target search space and that corresponds to the FPN; and determine, according to the corresponding second weight value, the second sub-search space corresponding to the FPN from the target search space.

Optionally, in a design of the third aspect, the architecture search module is specifically configured to:
obtain a first weight value that is of each of the plurality of operation types included in the target search space and that corresponds to the third convolutional layer; and obtain, according to the first weight value corresponding to the third convolutional layer, the third sub-search space corresponding to the third convolutional layer from the target search space.

Optionally, in a design of the third aspect, the architecture search module is specifically configured to:
obtain a second weight value that is of each of the plurality of operation types included in the target search space and that corresponds to the header; and determine, according to the second weight value header corresponding to the header, the third sub-search space corresponding to the header from the target search space.

Optionally, in a design of the third aspect, the backbone network includes a plurality of convolutional layers, the first convolutional layer is one of the plurality of convolutional layers included in the backbone network, and the architecture search module is specifically configured to:
perform architecture search for the to-be-searched perception network in the target search space, to determine an operation type corresponding to each convolutional layer in the plurality of convolutional layers included in the backbone network, the second operation type corresponding to the second convolutional layer, and the third operation type corresponding to the third convolutional layer.

Optionally, in a design of the third aspect, the FPN includes a plurality of convolutional layers, the second convolutional layer is one of the plurality of convolutional layers included in the FPN, and the architecture search module is specifically configured to:
perform architecture search for the to-be-searched perception network in the target search space, to determine the first operation type corresponding to the first convolutional layer, an operation type corresponding to each convolutional layer in the plurality of convolutional layers included in the FPN, and the third operation type corresponding to the third convolutional layer.

Optionally, in a design of the third aspect, the header includes a plurality of convolutional layers, the third convolutional layer is one of the plurality of convolutional layers included in the header, and the architecture search module is specifically configured to:
perform architecture search for the to-be-searched perception network in the target search space, to determine the first operation type corresponding to the first convolutional layer, the second operation type corresponding to the second convolutional layer, and an operation type corresponding to each of the plurality of convolutional layers included in the header.

Optionally, in a design of the third aspect, the apparatus further includes:

a receiving module, configured to receive a first model indicator from a device side; and
the architecture search module is specifically configured to:
perform architecture search for the to-be-searched perception network based on the first model indicator and a preset loss until the preset loss meets a preset condition, to obtain a found perception model, where the preset loss is related to a model indicator loss, the model indicator loss indicates a difference between a second model indicator of the to-be-searched perception network and the first model indicator, and the first model indicator and the second model indicator include at least one of the following: a model calculation amount FLOPs or a model parameter quantity Parameters.

Optionally, in a design of the third aspect, the apparatus further includes:
a sending module, configured to send the found perception model to the device side.

Optionally, in a design of the third aspect, the apparatus further includes:

a weight training module, configured to perform weight training on the found perception model, to obtain a trained perception model; and
the sending module is further configured to send the trained perception model to the terminal device.

According to a fourth aspect, this application provides a perception network architecture search apparatus, including:

an obtaining module, configured to obtain a to-be-searched perception network and a target search space, where the to-be-searched perception network includes a backbone network and a header (header), the backbone network is connected to the header, the backbone network includes a first convolutional layer, the header includes a third convolutional layer, and the target search space includes a plurality of operation types; and

an architecture search module, configured to perform architecture search for the first convolutional layer in the target search space, and perform architecture search for the third convolutional layer in the target search space, to obtain a found perception network, where a first convolutional layer included in the found perception network corresponds to a first operation type, a third convolutional layer included in the found perception network corresponds to a third operation type, and the first operation type and the third operation type are operation types in the plurality of operation types.

Optionally, in a design of the fourth aspect, the architecture search module is specifically configured to:

obtain a first sub-search space corresponding to the first convolutional layer, where the first sub-search space includes a part or all of the plurality of operation types; and perform architecture search for the first convolutional layer in the first sub-search space, to obtain the first operation type corresponding to the first convolutional layer, where the first operation type is one of operation types included in the first sub-search space; and/or obtain a third sub-search space corresponding to the third convolutional layer, where the third sub-search space includes a part or all of the plurality of operation types; and perform architecture search for the third convolutional layer in the third sub-search space, to obtain the third operation type corresponding to the third convolutional layer, where the third operation type is one of operation types included in the third sub-search space.

Optionally, in a design of the fourth aspect, the architecture search module is specifically configured to: obtain a first weight value that is of each of the plurality of operation types included in the target search space and that corresponds to the first convolutional layer, where the first weight value indicates a capability of an operation type to affect an output result of the to-be-searched perception network; and obtain, according to the first weight value corresponding to the first convolutional layer, the first sub-search space corresponding to the first convolutional layer from the target search space.

Optionally, in a design of the fourth aspect, the architecture search module is specifically configured to: obtain a second weight value that is of each of the plurality of operation types included in the target search space and that corresponds to the backbone network; and determine, according to the second weight value corresponding to the backbone network, the first sub-search space corresponding to the backbone network from the target search space, where the second weight value indicates a capability of an operation type to affect an output result of the to-be-searched perception network.

Optionally, in a design of the fourth aspect, the architecture search module is specifically configured to: obtain a second weight value that is of each of the plurality of operation types included in the target search space and that corresponds to the header; and determine, according to the second weight value header corresponding to the header, the third sub-search space corresponding to the header from the target search space.

Optionally, in a design of the fourth aspect, the backbone network includes a plurality of convolutional layers, the first convolutional layer is one of the plurality of convolutional layers included in the backbone network, and the architecture search module is specifically configured to: perform architecture search for the to-be-searched perception network in the target search space, to determine an operation type corresponding to each of the plurality of convolutional layers included in the backbone network, and the third operation type corresponding to the third convolutional layer.

Optionally, in a design of the fourth aspect, the header includes a plurality of convolutional layers, the third convolutional layer is one of the plurality of convolutional layers included in the header, and the architecture search module is specifically configured to: perform architecture search for the to-be-searched perception network in the target search space, to determine the first operation type corresponding to the first convolutional layer, and an operation type corresponding to each of the plurality of convolutional layers included in the header.

Optionally, in a design of the fourth aspect, the apparatus further includes:

a receiving module, configured to receive a first model indicator from a device side; and the architecture search module is specifically configured to: perform architecture search for the to-be-searched perception network based on the first model indicator and a preset loss until the preset loss meets a preset condition, to obtain a found perception model, where the preset loss is related to a model indicator loss, the model indicator loss indicates a difference between a second model indicator of the to-be-searched perception network and the first model indicator, and the first model indicator and the second model indicator include at least one of the following: a model calculation amount FLOPs or a model parameter quantity Parameters.

Optionally, in a design of the fourth aspect, the apparatus further includes:

a sending module, configured to send the found perception model to the device side.

Optionally, in a design of the fourth aspect, the apparatus further includes:

a training module, configured to perform weight training on the found perception model, to obtain a trained perception model.

The sending module is further configured to send the trained perception model to the terminal device.

According to a fifth aspect, an embodiment of this application provides an image processing method. The method includes:

obtaining a target image; and
performing target detection on the target image by using a perception network, to obtain a detection result.

The perception network includes a backbone network, a feature pyramid network FPN, and a header (header). The backbone network is connected to the FPN, and the FPN is connected to the header. The backbone network includes a first convolutional layer, the FPN includes a second convolutional layer, and the header includes a third convolutional layer. The first convolutional layer corresponds to a first operation type, the second convolutional layer corresponds to a second operation type, and the third convolutional layer corresponds to a third operation type. A correspondence between the first convolutional layer and the first operation type, a correspondence between the second convolutional layer and the second operation type, and a correspondence between the third convolutional layer and the third operation type are obtained by performing architecture search for a to-be-searched perception network in a target search space.

Alternatively, the perception network includes a backbone network and a header (header). The backbone network is connected to the header. The backbone network includes a first convolutional layer and the header includes a third convolutional layer. The first convolutional layer corresponds to a first operation type and the third convolutional layer corresponds to a third operation type. A correspondence between the first convolutional layer and the first operation type and a correspondence between the third convolutional layer and the third operation type are obtained by performing architecture search for a to-be-searched perception network in a target search space.

The target search space includes a plurality of operation types, and the first operation type, the second operation type, and the third operation type are operation types in the plurality of operation types.

Optionally, in a design of the fifth aspect, when architecture search is performed, a search space corresponding to the first convolutional layer is a first sub-search space;

a search space corresponding to the second convolutional layer is a second sub-search space; or
a search space corresponding to the third convolutional layer is a third sub-search space.

The first sub-search space and the second sub-search space include a part or all of the plurality of operation types.

According to a sixth aspect, an embodiment of this application provides an appratus for image processing. The apparatus includes:

an obtaining module, configured to obtain a target image; and
a target detection module, configured to perform target detection on the target image by using a perception network, to obtain a detection result.

The perception network includes a backbone network, a feature pyramid network FPN, and a header (header). The backbone network is connected to the FPN, and the FPN is connected to the header. The backbone network includes a first convolutional layer, the FPN includes a second convolutional layer, and the header includes a third convolutional layer. The first convolutional layer corresponds to a first operation type, the second convolutional layer corresponds to a second operation type, and the third convolutional layer corresponds to a third operation type. A correspondence between the first convolutional layer and the first operation type, a correspondence between the second convolutional layer and the second operation type, and a correspondence between the third convolutional layer and the third operation type are obtained by performing architecture search for a to-be-searched perception network in a target search space.

Alternatively, the perception network includes a backbone network and a header (header). The backbone network is connected to the header. The backbone network includes a first convolutional layer and the header includes a third convolutional layer. The first convolutional layer corresponds to a first operation type and the third convolutional layer corresponds to a third operation type. A correspondence between the first convolutional layer and the first operation type and a correspondence between the third convolutional layer and the third operation type are obtained by performing architecture search for a to-be-searched perception network in a target search space.

The target search space includes a plurality of operation types, and the first operation type, the second operation type, and the third operation type are operation types in the plurality of operation types.

Optionally, in a design of the sixth aspect, when architecture search is performed, a search space corresponding to the first convolutional layer is a first sub-search space;

a search space corresponding to the second convolutional layer is a second sub-search space; or
a search space corresponding to the third convolutional layer is a third sub-search space.

The first sub-search space and the second sub-search space include a part or all of the plurality of operation types.

According to a seventh aspect, an embodiment of this application provides a perception network architecture search apparatus, which may include a memory, a processor, and a bus system. The memory is configured to store a program, and the processor is configured to execute the program in the memory, to perform the first aspect and any optional method of the first aspect, or the second aspect and any optional method of the second aspect.

According to an eighth aspect, an embodiment of this application provides an image processing apparatus, which may include a memory, a processor, and a bus system. The memory is configured to store a program, and the processor is configured to execute the program in the memory, to perform the fifth aspect and any optional method of the fifth aspect.

According to a ninth aspect, an embodiment of this application provides a computer-readable storage medium. The computer-readable storage medium stores a computer program, and when the computer program runs on a computer, the computer is enabled to perform the first aspect and any optional method of the first aspect, or the second aspect and any optional method of the second aspect.

According to a tenth aspect, an embodiment of this application provides a computer-readable storage medium. The computer-readable storage medium stores a computer program, and when the computer program runs on a computer, the computer is enabled to perform the fifth aspect and any optional method of the fifth aspect.

According to an eleventh aspect, an embodiment of this application provides a computer program. When the computer program runs on a computer, the computer is enabled to perform the first aspect and any optional method of the first aspect, or the second aspect and any optional method of the second aspect.

According to a twelfth aspect, an embodiment of this application provides a computer program. When the computer program runs on a computer, the computer is enabled to perform the fifth aspect and any optional method of the fifth aspect.

According to an eighth aspect, this application provides a chip system. The chip system includes a processor, configured to support an execution device or a training device in implementing functions in the foregoing aspects, for example, sending or processing data in the foregoing methods, or information. In a possible design, the chip system further includes a memory, and the memory is configured to store program instructions and data that are necessary for the execution device or the training device. The chip system may include a chip, or may include a chip and another discrete component.

This application provides a perception network architecture search method, including: obtaining a to-be-searched perception network and a target search space, where the to-be-searched perception network includes a backbone network, a feature pyramid network FPN, and a header (header), the backbone network is connected to the FPN, the FPN is connected to the header, the backbone network includes a first convolutional layer, the FPN includes a second convolutional layer, the header includes a third convolutional layer, and the target search space includes a plurality of operation (operation) types; and performing architecture search for the first convolutional layer in the target search space, performing architecture search for the second convolutional layer in the target search space, and performing architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types. In the foregoing manner, architecture search is performed on all three network architectures (a part or all of the convolutional layers included in the backbone network, the FPN, and the header) in the to-be-searched perception network, so that performance of the perception network obtained after architecture search is better.

**BRIEF DESCRIPTION OF DRAWINGS**

FIG. 1 is a schematic diagram depicting a structure of an artificial intelligence main framework;
FIG. 2a and FIG. 2b are schematic diagrams of a framework of an application system according to the present invention;

FIG. 3 is a schematic diagram of an application scenario according to this application;

FIG. 4 is a schematic diagram of an application scenario according to this application;

FIG. 5 is a schematic diagram of a system architecture according to this application;

FIG. 6 is a schematic diagram depicting an architecture of a neural network according to an embodiment of this application;

FIG. 7 is a schematic diagram depicting an architecture of a neural network according to an embodiment of this application;

FIG. 8a is a hardware structure of a chip according to an embodiment of this application;

FIG. 8b is a system architecture according to an embodiment of this application;

FIG. 9 is a schematic flowchart of a perception network architecture search method according to an embodiment of this application;

FIG. 10a and FIG. 10b are backbone networks backbone according to embodiments of this application;

FIG. 11 is a schematic diagram depicting an architecture of an FPN;

FIG. 12a is a schematic diagram of a header;

FIG. 12b is a schematic diagram of an RPN layer of a header;

FIG. 13a is a schematic diagram of an architecture search process according to an embodiment;

FIG. 13b is a schematic diagram of an architecture search process according to an embodiment;

FIG. 14 is a schematic flowchart of a perception network architecture search method according to an embodiment of this application;

FIG. 15 is a schematic flowchart of an image processing method according to an embodiment of this application;

FIG. 16 is a schematic flowchart of a perception network architecture search method according to an embodiment of this application;

FIG. 17 is a schematic diagram depicting a structure of a perception network architecture search apparatus according to an embodiment of this application;

FIG. 18 is a schematic diagram depicting a structure of an image processing apparatus according to an embodiment of this application;

FIG. 19 is a schematic diagram depicting a structure of an execution device according to an embodiment of this application;

FIG. 20 is a schematic diagram depicting a structure of a training device according to an embodiment of this application; and

FIG. 21 is a schematic diagram depicting a structure of a chip according to an embodiment of this application.

## DESCRIPTION OF EMBODIMENTS

The following describes embodiments of the present invention with reference to the accompanying drawings in embodiments of the present invention. Terms used in an implementation part of the present invention are intended only to explain specific embodiments of the present invention, and not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, and this is merely a manner of distinguishing when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

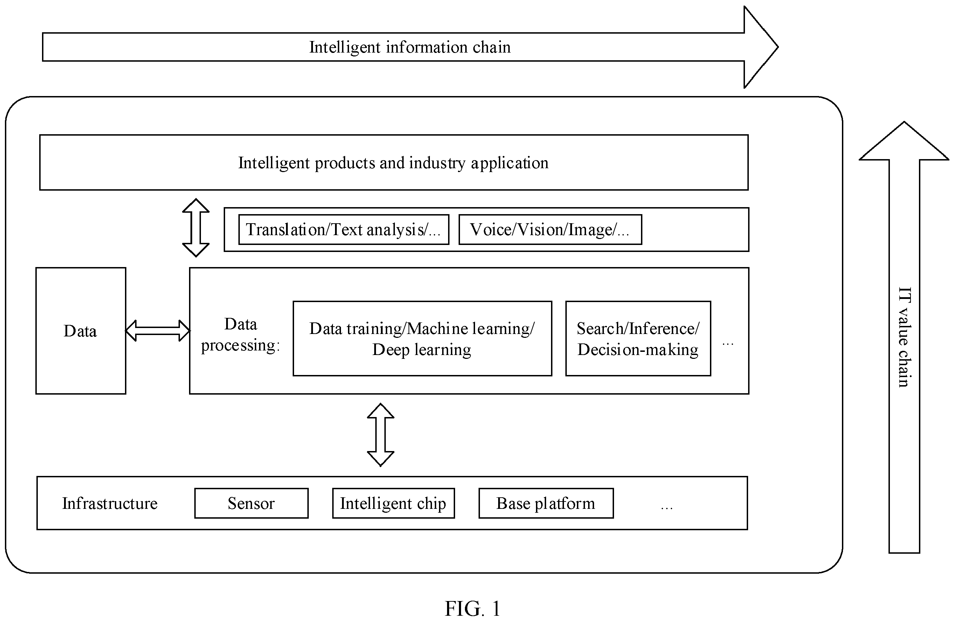

An overall working procedure of an artificial intelligence system is first described. Refer to FIG. 1. FIG. 1 shows a schematic diagram depicting a structure of an artificial intelligence main framework. The following describes the foregoing artificial intelligence main framework from two dimensions: "intelligent information chain" (horizontal axis) and "IT value chain" (vertical axis). The "intelligent information chain" reflects a general process from data obtaining to data processing. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry in a process from an underlying infrastructure and information (providing and processing technology implementation) of human intelligence to a systemic industrial ecology.

(1) Infrastructure

The infrastructure provides computing capability support for the artificial intelligence system, implements communication with the external world, and implements support by using a base platform. External communication is performed by using a sensor. The computing capability is provided by an intelligent chip (a hardware acceleration chip, for example, a CPU, an NPU, a GPU, an ASIC, or an FPGA). The base platform includes related platform assurance and support such as a distributed computing framework and a network, and may include cloud storage and computing, an interconnection and interworking network, and the like. For example, the sensor communicates with the outside to obtain data, and the data is provided to the intelligent chip in the distributed computing system for computation, where the distributed computing system is provided by the base platform.

(2) Data

Data at an upper layer of the infrastructure is used to indicate a data source in the field of artificial intelligence. The data relates to a graph, an image, a voice, and text, further relates to internet of things data of a conventional device, and includes service data of an existing system and perception data such as force, displacement, a liquid level, a temperature, and humidity.

(3) Data processing

Data processing usually includes manners such as data training, machine learning, deep learning, searching, inference, and decision-making.
Machine learning and deep learning may mean performing symbolized and formalized intelligent information modeling, extraction, preprocessing, training, and the like on data.
Inference is a process in which a pattern of human intelligent inference is simulated in a computer or an intelligent system, and machine thinking and problem resolving are performed by using formalized information according to an inferring control policy. A typical function is searching and matching.
Decision-making is a process in which a decision is made after intelligent information is inferred, and usually provides functions such as classification, ranking, and prediction.

(4) General capabilities

After data processing mentioned above is performed on data, some general capabilities may be further formed based on a data processing result, for example, an algorithm or a general system, such as translation, text analysis, computer vision processing, speech recognition, and image recognition.

(5) Intelligent product and industry application

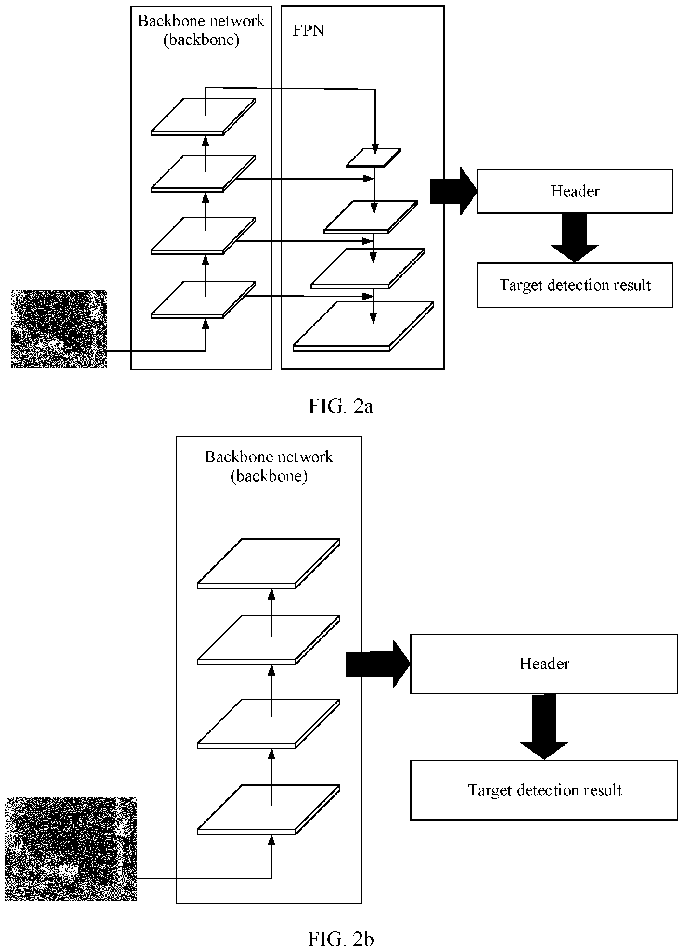

Intelligent products and industry applications refer to products and applications of artificial intelligence systems in various fields, and are encapsulation for an overall artificial intelligence solution, to productize intelligent information decision-making and implement applications. Application fields thereof mainly include intelligent terminal, intelligent transportation, intelligent healthcare, autonomous driving, safe city, and the like.
Embodiments of this application are mainly applied to fields in which a plurality of perception tasks need to be completed, such as driver assistance, autonomous driving, and a mobile phone terminal. A framework of an application system of the present invention is shown in FIG. 2a and FIG. 2b. Frame extraction is performed on a video to obtain a single image, and the image is sent to the perception network shown in FIG. 2a or FIG. 2b of the present invention to obtain information about 2D, 3D, Mask (mask), key points, and the like of an object of interest in the image. The detection results are sent to a post-processing module for processing, for example, sent to a planning control unit in an autonomous driving system for decision-making, or sent to a mobile phone terminal for processing according to a beautification algorithm to obtain a beautified image. The following briefly describes two application scenarios: ADAS/ADS visual perception system and mobile phone beautification.

Application scenario 1: ADAS/ADS visual perception system

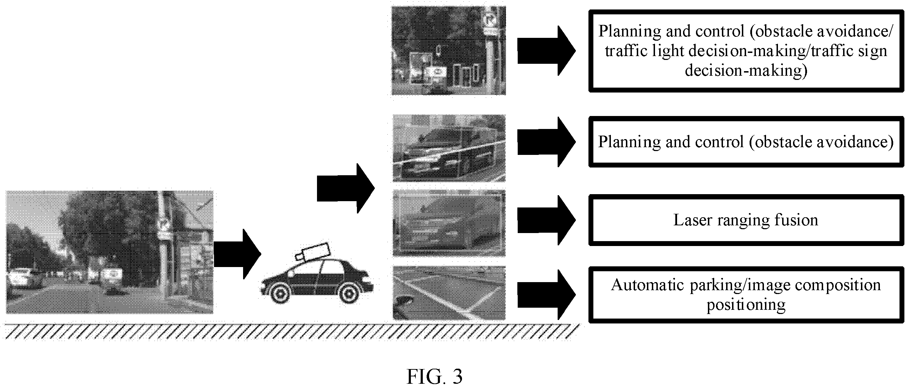

As shown in FIG. 3, in ADAS and ADS, multiple types of 2D target detection need to be performed in real time, including dynamic obstacle (Pedestrian), cyclist (Cyclist), tricycle (Tricycle), car (Car), truck (Truck), bus (Bus), static obstacle (traffic cone (TrafficCone), traffic stick (TrafficStick), fire hydrant (FireHydrant), motorcycle (Motorcycle), bicycle (Bicycle), traffic sign (TrafficSign), guide sign (GuideSign), billboard (Billboard), red traffic light (TrafficLight_Red)/yellow traffic light (TrafficLight_Yellow)/green traffic light (TrafficLight_Green)/black traffic light (TrafficLight Black) and road sign (RoadSign). In addition, to accurately obtain a region occupied by the dynamic obstacle in 3D space, 3D estimation further needs to be performed on the dynamic obstacle, to output a 3D box. To integrate with data of laser radar, a mask of a dynamic obstacle needs to be obtained to filter out laser point clouds that hit the dynamic obstacle. To accurately locate a parking space, four key points of the parking space need to be detected at the same time. For image composition positioning, key points of a static obstacle need to be detected. By using the technical solutions provided in embodiments of this application, all or a part of the foregoing functions can be completed in the perception network.

Application scenario 2: beautification function of a mobile phone

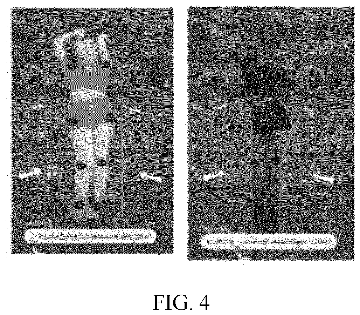

As shown in FIG. 4, in a mobile phone, a mask and key points of a human body are detected by using the perception network provided in embodiments of this application, and a corresponding part of the human body may be zoomed in or zoomed out, for example, a waist and a hip beauty operation, to output a beautified image.

Application scenario 3: image classification scenario

After obtaining a to-be-classified image, an object recognition apparatus obtains a category of an object in the to-be-classified image according to an object recognition method in this application, and then the to-be-classified image may be classified based on the category of the object in the to-be-classified image. A photographer takes many photos every day, such as photos of animals, photos of people, and photos of plants. According to the method in this application, the photos can be quickly classified based on content in the photos, and may be classified into photos including animals, photos including people, and photos including plants.

When there are a large quantity of images, efficiency of manual classification is low, and a person is prone to be tired when processing a same thing for a long time. In this case, a classification result has a big error. However, according to the method in this application, the images can be quickly classified without an error.

Application scenario 4: commodity classification

After obtaining a commodity image, the object recognition apparatus obtains a category of a commodity in the commodity image according to the object recognition method in this application, and then categorizes the commodity based on the category of the commodity. For a variety of commodities in a large shopping mall or a supermarket, the commodities can be quickly classified according to the object recognition method in this application, to reduce time overheads and labor costs.

The following describes, from a model training side and a model application side, the method provided in this application.

The CNN feature extraction model training method provided in embodiments of this application relates to computer vision processing, and may be specifically applied to data processing methods such as data training, machine learning, and deep learning, to perform symbolized and formalized intelligent information modeling, extraction, preprocessing, training, and the like on training data (for example, an image or an image block of an object and a category of the object in this application), to finally obtain a trained CNN feature extraction model. In addition, in embodiments of this application, input data (for example, an image of an object in this application) is input into the trained CNN feature extraction model, to obtain output data (for example, information such as 2D, 3D, mask, and key points of an object of interest in the image is obtained in this application).

Because embodiments of this application relate to massive application of neural networks, for ease of understanding, the following first describes related terms and related concepts such as neural network in embodiments of this application.

(1) Object recognition: A category of an image or object is determined by using related methods such as image processing, machine learning, and computer graphics.

(2) Neural network

The neural network may include neurons. The neuron may be an operation unit that uses $x_s$ and an intercept of 1 as an input. An output of the operation unit may be as follows:

$$h_{W,b}(x) = f\left(W^T x\right) = f\left(\sum\nolimits_{s=1}^{n} W_s x_s + b\right) \quad (1\text{-}1)$$

s=1, 2, ..., or n, n is a natural number greater than 1, $W_s$ is a weight of $x_s$, and b is bias of the neuron. f indicates an activation function (activation functions) of the neuron, and is used for introducing a non-linear characteristic into the neural network, to convert an input signal in the neuron into an output signal. The output signal of the activation function may be used as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

(3) Deep neural network

The deep neural network (Deep Neural Network, DNN) may be understood as a neural network having many hidden layers. There is no special metric standard for "many" herein. A multi-layer neural network and the deep neural network are essentially the same. The DNN is divided based on locations of different layers, and a neural network in the DNN may be divided into three types: an input layer, a hidden layer, and an output layer. Generally, the first layer is the input layer, the last layer is the output layer, and the middle layers are the hidden layers. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, only such a simple operation is performed on the input vector $\vec{x}$ to obtain the output vector $\vec{y}$. Because the DNN has a large quantity layers, there are a large quantity of the coefficients W and the offset vectors $\vec{b}$. How are specific parameters defined in the DNN? First, refer to the definition of the coefficient . A three-layer DNN is used as an example. For example, a linear coefficient from the fourth neuron at the second layer to the second neuron at the third layer is defined as $\mathrm{w}_{24}^{3}$ . The superscript 3 represents the layer where the coefficient is located $W$, and the subscript corresponds to the output third-layer index 2 and the input second-layer index 4. In conclusion, a coefficient from the $k^{th}$ neuron at the $(L-1)^{th}$ layer to the $j^{th}$ neuron at the $L^{th}$ layer is defined as $W_{jk}^{L}$ . Note that the input layer has no parameter W. In the deep neural network, more hidden layers make the network more capable of describing a complex case in the real world. Theoretically, a model with more parameters has higher complexity and a larger "capacity". It means that the model can complete a more complex learning task.

(4) Convolutional neural network (Convolutional Neural Network, CNN): The convolutional neural network is a deep neural network with a convolutional architecture. The convolutional neural network includes a feature extractor consisting of a convolutional layer and a sub sampling layer. The feature extractor may be considered as a filter. A convolution process may be considered as performing convolution by using a trainable filter and an input image or a convolution feature map (feature map). The convolutional layer is a neuron layer that is in the convolutional neural network and at which convolution processing is performed on an input signal. At the convolutional layer of the convolutional neural network, a neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a location. The principles implied herein are that statistical information of a part of an image is the same as that of another part. To be specific, image information that is learned in a part can also be used in another part. Therefore, for all locations in the image, same learning can be used to obtain image information. At a same convolutional layer, a plurality of convolution kernels may be used to extract different image information. Usually, a larger quantity of convolution kernels indicates richer image information reflected by a convolution operation.

The convolution kernel may be initialized in a form of a matrix of a random size. In a training process of the convolutional neural network, an appropriate weight may be obtained for the convolution kernel through learning. In addition, a direct benefit brought by weight sharing is that connections between layers of the convolutional neural network are reduced and an overfitting risk is lowered.

(5) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an error loss occurs when an input signal is transferred forward until output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

(6) A recurrent neural network (recurrent neural networks, RNN) is used to process sequence data.

A conventional neural network model is input layer-hidden layer-output layer. The layers are fully connected, and nodes at each layer are not connected. This common neural network resolves many problems, but is still incompetent to resolve many other problems. For example, to predict a next word in a sentence, a previous word usually needs to be used, because adjacent words in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are connected, and an input of the hidden layer not only includes an output of the input layer, but also includes an output of the hidden layer at a previous moment. Theoretically, the RNN can process sequence data of any length. Training of the RNN is the same as training of a conventional CNN or DNN.

Now that there is a convolutional neural network, why is the recurrent neural network required? In the convolutional neural network, there is a premise that elements are independent of each other, and an input and an output are also independent, such as a cat and a dog. However, many elements are interconnected in the real world. For example, stocks change over time. For another example, a person says: I like traveling, my favorite place is Yunnan, and I will go there in the future if there is a chance. Herein, people should know that the person will go to "Yunnan". This is because people can make an inference from a context, but how can a machine do this? The RNN emerges. The RNN is intended to make the machine capable of memorizing like a human. Therefore, an output of the RNN needs to depend on current input information and historical memorized information.

(7) Loss function

In a process of training a deep neural network, because it is expected that an output of the deep neural network is as much as possible close to a predicted value that is actually expected, a currently predicted value of the network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed until the deep neural network can predict the target value that is actually expected or a value that is very close to the target value that is actually expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(8) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an error loss occurs when an input signal is transferred forward until output, and the parameter in the initial neural network model is updated based on back propagation error loss information, to make the error loss converge. The back propagation algorithm is an error-loss-centered back propagation motion intended to obtain a parameter, such as a weight matrix, of an optimal neural network model.

The following describes a system architecture provided in embodiments of this application.

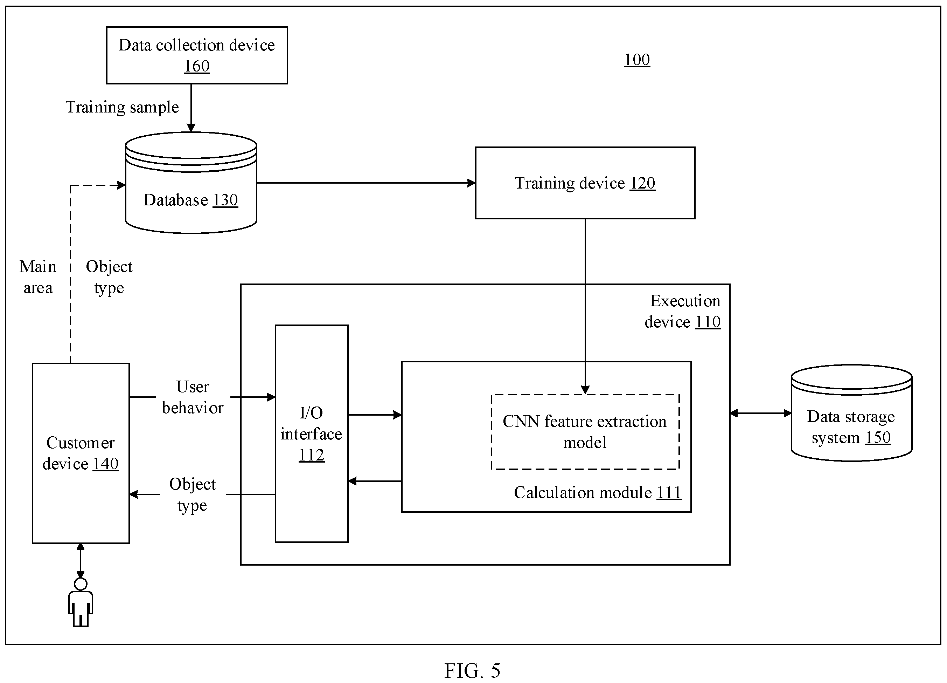

Refer to FIG. 5. An embodiment of this application provides a system architecture 100. As shown in the system architecture 100, a data collection device 160 is configured to collect training data. In this embodiment of this application, the training data includes an image or an image block of an object and a category of the object. The training data is stored in a database 130. A training device 120 performs training based on the training data maintained in the database 130 to obtain a CNN feature extraction model (the feature extraction model herein is the model obtained through training in the training phase described above, and may be a neural network used for feature extraction, or the like). The following uses Embodiment 1 to describe in more detail how the training device 120 obtains the CNN feature extraction model based on the training data. The CNN feature extraction model can be used to implement the neural network provided in this embodiment of this application, that is, a to-be-recognized image or image block is input into the CNN feature extraction model after related preprocessing, and information such as 2D, 3D, mask, and key points of the object of interest in the to-be-recognized image or image block may be obtained. The CNN feature extraction model in this embodiment of this application may be specifically a CNN convolutional neural network. It should be noted that, in actual application, the training data maintained in the database 130 is not necessarily all collected by the data collection device 160, and may be received from another device. It should be additionally noted that the training device 120 does not necessarily perform CNN feature extraction model training completely based on the training data maintained in the database 130, or may obtain training data from a cloud or another place to perform model training. The foregoing description should not be used as a limitation on this embodiment of this application.

A target model/rule obtained through training by the training device 120 may be applied to different systems or devices, for example, an execution device 110 shown in FIG. 5. The execution device 110 may be a terminal, for example, a mobile phone terminal, a tablet computer, a laptop computer, augmented reality (augmented reality, AR)/virtual reality (virtual reality, VR), or a vehicle-mounted terminal; or may be a server, a cloud, or the like. In FIG. 5, the execution device 110 is configured with an input/output (input/output, I/O) interface 112 for data exchange with an external device. A user may input data to the I/O interface 112 by using a client device 140. The input data may include a to-be-recognized image, image block, or picture.

In a process in which the execution device 120 preprocesses the input data, or in a process in which a calculation module 111 of the execution device 120 performs related processing such as calculation (for example, implements a function of the neural network in this application), the execution device 120 may invoke data, code, and the like in a data storage system 150 for corresponding processing; or may store data, instructions, and the like obtained through corresponding processing into the data storage system 150.

Finally, the I/O interface 112 returns a processing result, such as the obtained information such as 2D, 3D, mask, and key points of the object of interest in the image, image block or picture, to the client device 140, to provide the processing result to the user.

Optionally, the client device 140 may be a planning control unit in an autonomous driving system or a beautification algorithm module in a mobile phone terminal.

It should be noted that the training device 120 may generate corresponding target models/rules for different targets or different tasks based on different training data. The corresponding target models/rules may be used to implement the targets or complete the tasks, to provide a required result for the user.

In a case shown in FIG. 5, the user may manually provide input data. Manually providing may be performed through an interface provided by the I/O interface 112. In another case, the client device 140 may automatically send input data to the I/O interface 112. If it is required that the client device 140 needs to obtain authorization from the user to automatically send the input data, the user may set corresponding permission on the client device 140. The user may check, on the client device 140, a result output by the execution device 110. Specifically, the result may be presented in a form of display, sound, an action, or the like. The client device 140 may also serve as a data collector to collect, as new sample data, the input data that is input to the I/O interface 112 and the output result that is output from the I/O interface 112 shown in the figure, and store the new sample data in the database 130. Certainly, the client device 140 may alternatively not perform collection. Instead, the I/O interface 112 directly stores, in the database 130 as new sample data, the input data that is input to the I/O interface 112 and the output result that is output from the I/O interface 112 in the figure.

It should be noted that FIG. 5 is merely a schematic diagram of a system architecture according to an embodiment of this application. A location relationship between the devices, the components, the modules, and the like shown in the figure does not constitute any limitation. For example, in FIG. 5, the data storage system 150 is an external memory relative to the execution device 110, but in another case, the data storage system 150 may alternatively be disposed in the execution device 110.

As shown in FIG. 5, a CNN feature extraction model is obtained through training by the training device 120. In this embodiment of this application, the CNN feature extraction model may be a CNN convolutional neural network, or may be a neural network to be described in the following embodiment.

Because the CNN is a very common neural network, the following describes an architecture of the CNN in detail with reference to FIG. 5. As described in the foregoing basic concepts, a convolutional neural network is a deep neural network with a convolutional architecture, and is a deep learning (deep learning) architecture. In the deep learning architecture, multi-layer learning is performed at different abstract levels by using a machine learning algorithm. As a deep learning architecture, the CNN is a feed-forward (feed-forward) artificial neural network. Neurons in the feed-forward artificial neural network may respond to an input image.

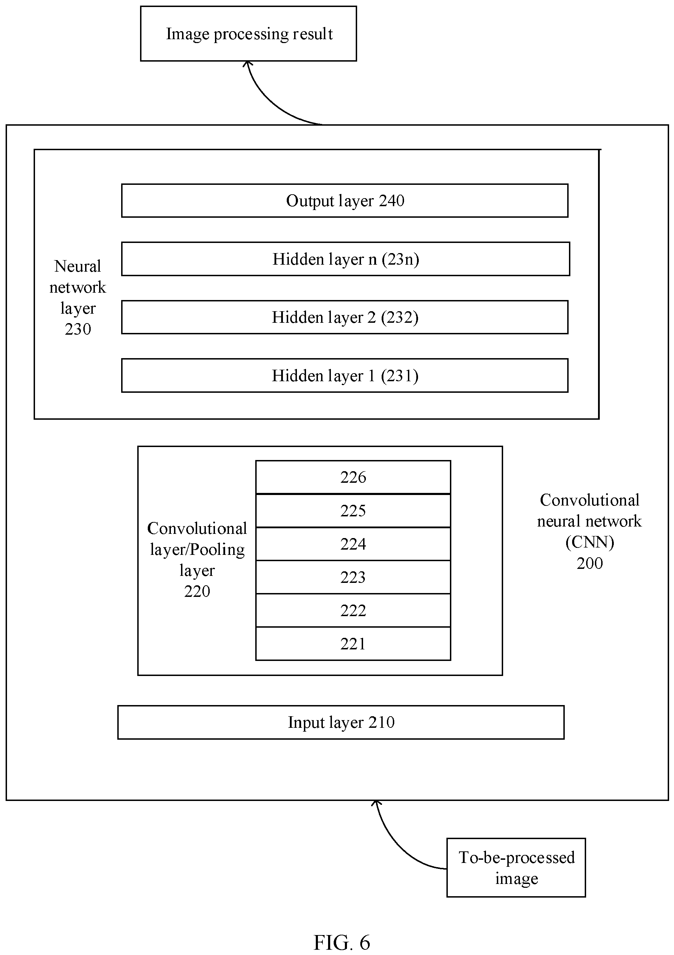

A neural network architecture specifically used in the image processing method in embodiments of this application may be shown in FIG. 6. In FIG. 6, a convolutional neural network (CNN) 200 may include an input layer 210, a convolutional layer/pooling layer 220 (where the pooling layer is optional), and a neural network layer 230. The input layer 210 may obtain a to-be-processed image, and send the obtained to-be-processed image to the convolutional layer/pooling layer 220 and the subsequent neural network layer 230 for processing, to obtain a processing result of the image. The following describes in detail an internal layer architecture of the CNN 200 in FIG. 6.

Convolutional layer/pooling layer 220:

Convolutional layer:

As shown in FIG. 6, the convolutional layer/pooling layer 220 may include layers 221 to 226 shown in the example. In an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, 221 and 222 are convolutional layers, 223 is a pooling layer, 224 and 225 are convolutional layers, and 226 is a pooling layer. In other words, an output of a convolutional layer may be used as an input for a subsequent pooling layer, or may be used as an input for another convolutional layer, to continue to perform a convolution operation.

The following describes internal working principles of the convolutional layer by using the convolutional layer 221 as an example.

The convolutional layer 221 may include a plurality of convolution operators. The convolution operator is also referred to as a kernel. During image processing, the convolution operator functions as a filter that extracts specific information from an input image matrix. The convolution operator may essentially be a weight matrix, and the weight matrix is usually predefined. In a process of performing a convolution operation on the image, the weight matrix usually processes pixels at a granularity level of one pixel (or two pixels, depending on a value of a stride (stride)) in a horizontal direction on the input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows × columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and a further weight matrix is used to blur unneeded noise in the image. The plurality of weight matrices have the same size (rows × columns), and convolutional feature maps extracted from the plurality of weight matrices with the same size have a same size. Then, the plurality of extracted convolutional feature maps with the same size are combined to form an output of the convolution operation.

Weight values in these weight matrices need to be obtained through a lot of training during actual application. Each weight matrix formed by using the weight values obtained through training may be used for extracting information from an input image, to enable the convolutional neural network 200 to perform correct prediction.

When the convolutional neural network 200 has a plurality of convolutional layers, a large quantity of general features are usually extracted at an initial convolutional layer (for example, 221). The general feature may also be referred to as a low-level feature. As the depth of the convolutional neural network 200 increases, a feature extracted at a subsequent convolutional layer (for example, 226) becomes more complex, for example, a high-level semantic feature. A feature with higher semantics is more applicable to a to-be-resolved problem.

Pooling layer:

Because a quantity of training parameters usually needs to be reduced, a pooling layer usually needs to be periodically introduced after the convolutional layer. For layers 221 to 226 shown in 220 in FIG. 6, one convolutional layer may be followed by one pooling layer. Alternatively, a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a smaller size. The average pooling operator may be used to calculate pixel values in the image in a specific range, to generate an average value. The average value is used a result of average pooling. The maximum pooling operator may be used to select a pixel with a maximum value in a specific range as a result of maximum pooling. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

Neural network layer 230:

After processing is performed by the convolutional layer/pooling layer 220, the convolutional neural network 200 still cannot output required output information. As described above, at the convolutional layer/pooling layer 220, only features are extracted, and parameters brought by the input image are reduced. However, to generate final output information (required class information or other related information), the convolutional neural network 200 needs to use the neural network layer 230 to generate an output of one required class or outputs of a group of required classes. Therefore, the neural network layer 230 may include a plurality of hidden layers (such as 231, 232 to 23n shown in FIG. 6) and an output layer 240. Parameters included in the plurality of hidden layers may be obtained through pre-training based on related training data of a specific task type, for example, the task type may include image recognition, image classification, super-resolution image reconstruction, and the like.

After the plurality of hidden layers in the neural network layer 230, that is, the last layer of the entire convolutional neural network 200 is the output layer 240. The output layer 240 has a loss function similar to cross entropy for classification, and is specifically configured to calculate a prediction error. Once forward propagation (for example, propagation in a direction from 210 to 240 in FIG. 6 is forward propagation) of the entire convolutional neural network 200 is completed, back propagation (for example, propagation in a direction from 240 to 210 in FIG. 6 is back propagation) starts to update the weight value and a deviation of each layer mentioned above, to reduce a loss of the convolutional neural network 200 and an error between a result output by the convolutional neural network 200 through the output layer and an ideal result.

It should be noted that the convolutional neural network 210 shown in FIG. 2 is merely used as an example of the convolutional neural network. The convolutional neural network may alternatively exist in a form of another network model in specific application.

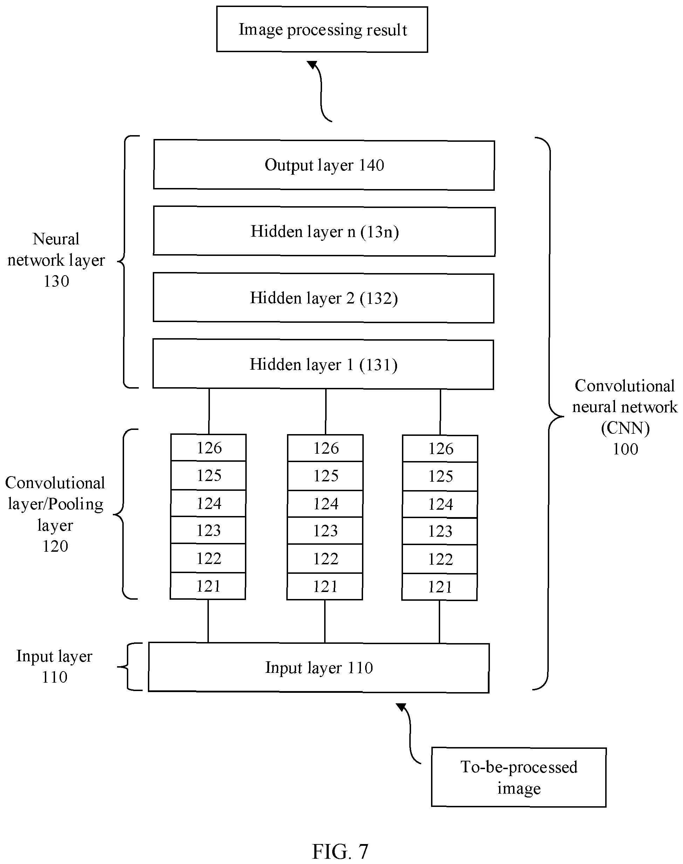

A neural network architecture specifically used in the image processing method in embodiments of this application may be shown in FIG. 7. In FIG. 7, a convolutional neural network (CNN) 200 may include an input layer 110, a convolutional layer/pooling layer 120 (where the pooling layer is optional), and a neural network layer 130. Compared with FIG. 6, a plurality of convolutional layers/pooling layers in the convolutional layer/pooling layer 120 in FIG. 7 are parallel, and all separately extracted features are input to the neural network layer 130 for processing.

It should be noted that the convolutional neural networks shown in FIG. 6 and FIG. 7 are merely used as examples of two possible convolutional neural networks of the image processing method in embodiments of this application. In specific application, the convolutional neural network used in the image processing method in embodiments of this application may alternatively exist in a form of another network model.

In addition, a convolutional neural network architecture obtained by using the neural network architecture search method in embodiments of this application may be shown in the convolutional neural network architectures in FIG. 6 and FIG. 7.

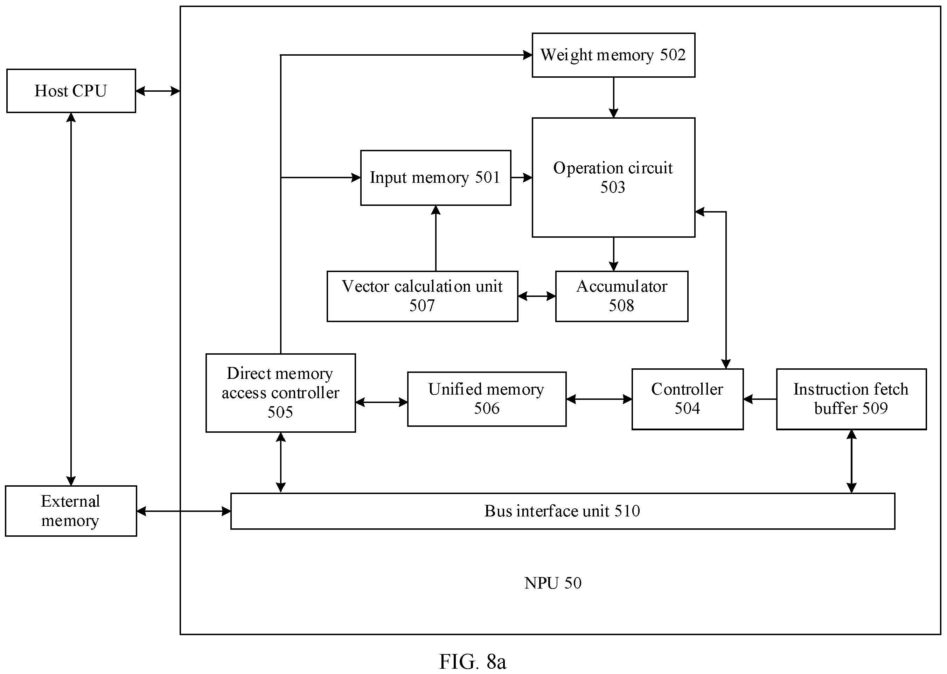

FIG. 8a shows a hardware structure of a chip according to an embodiment of this application. The chip includes a neural network processing unit NPU 50. The chip may be disposed in the execution device 110 shown in FIG. 5, to complete the calculation work of the calculation module 111. Alternatively, the chip may be disposed in the training device 120 shown in FIG. 5, to complete the training work of the training device 120 and output a target model/rule. All algorithms at layers in the convolutional neural networks shown in FIG. 6 and FIG. 7 may be implemented in the chip shown in FIG. 8a.

The neural network processing unit NPU 50 is mounted to a host central processing unit (central processing unit, CPU) (host CPU) as a coprocessor, and the host CPU allocates a task. A core part of the NPU is an operation circuit 503. A controller 504 controls the operation circuit 503 to extract data in a memory (a weight memory or an input memory) and perform an operation.

In some implementations, the operation circuit 503 internally includes a plurality of processing units (process engine, PE). In some implementations, the operation circuit 503 is a two-dimensional systolic array. Alternatively, the operation circuit 503 may be a one-dimensional systolic array or another electronic circuit that can perform mathematical operations such as multiplication and addition. In some implementations, the operation circuit 503 is a general-purpose matrix processor.

For example, it is assumed that there is an input matrix A, a weight matrix B, and an output matrix C. The operation circuit extracts corresponding data of the matrix B from a weight memory 502, and buffers the corresponding data into each PE in the operation circuit. The operation circuit obtains data of the matrix A from an input memory 501 to perform a matrix operation on the matrix B, to obtain a partial result or a final result of the matrix, which is stored in an accumulator (accumulator) 508.

A vector calculation unit 507 may perform further processing on the output of the operation circuit, for example, vector multiplication, vector addition, exponential operation, logarithmic operation, and size comparison. For example, the vector calculation unit 507 may be configured to perform network calculation at a non-convolutional/non-FC layer in a neural network, for example, pooling (pooling), batch normalization (batch normalization), and local response normalization (local response normalization).

In some implementations, the vector calculation unit 507 can store a processed output vector into a unified buffer 506. For example, the vector calculation unit 507 may apply a non-linear function to an output, for example, a vector of an accumulated value, of the operation circuit 503 to generate an activation value. In some implementations, the vector calculation unit 507 generates a normalized value, a combined value, or both a normalized value and a combined value. In some implementations, the processed output vector can be used as an activation input for the operation circuit 503, for example, used in a subsequent layer in the neural network.

The unified memory 506 is configured to store input data and output data.

A direct memory access controller 505 (direct memory access controller, DMAC) transfers input data to the input memory 501 and/or the unified memory 506, stores the weight data in the external memory to the weight memory 502, and stores the data in the unified memory 506 to the external memory.

A bus interface unit (bus interface unit, BIU) 510 is configured to implement interaction between the host CPU, the DMAC, and an instruction fetch buffer 509 by using a bus.

The instruction fetch buffer (instruction fetch buffer) 509 connected to the controller 504 is configured to store instructions used by the controller 504.

The controller 504 is configured to invoke instructions cached in the instruction fetch buffer 509, to control a working process of an operation accelerator.

Optionally, in this application, the input data herein is an image, and the output data is information such as 2D, 3D, mask, and keyspoints of an object of interest in the image.

Generally, the unified memory 506, the input memory 501, the weight memory 502, and the instruction fetch buffer 509 are all on-chip (On-Chip) memories. The external memory is a memory outside the NPU, and the external memory may be a double data rate synchronous dynamic random access memory (double data rate synchronous dynamic random access memory, DDR SDRAM), a high bandwidth memory (high bandwidth memory, HBM) or another readable and writable memory.

The execution device 110 in FIG. 5 described above can perform the image processing method or the steps of the image processing method in embodiments of this application, the CNN models shown in FIG. 6 and FIG. 7 and the chip shown in FIG. 8a may also be configured to perform the image processing method or the steps of the image processing method in embodiments of this application. The following describes the image processing method in embodiments of this application in detail with reference to the accompanying drawings.

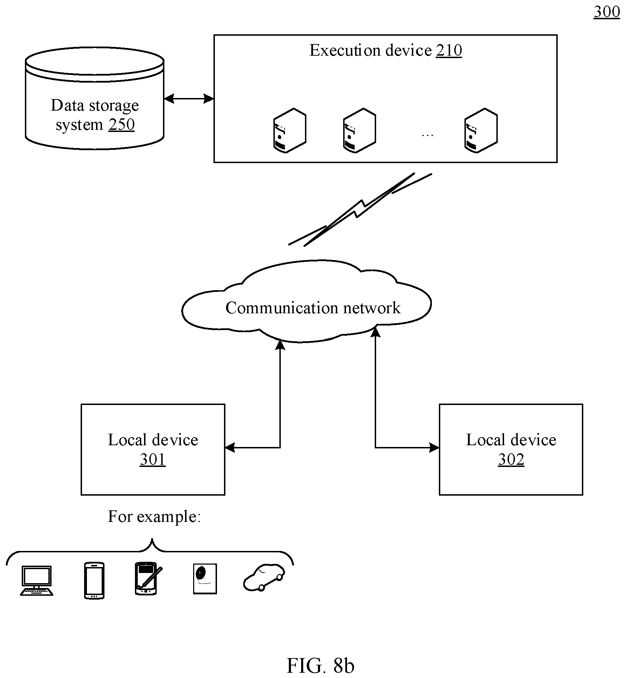

As shown in FIG. 8b, an embodiment of this application provides a system architecture 300. The system architecture includes a local device 301, a local device 302, an execution device 210, and a data storage system 250. The local device 301 and the local device 302 are connected to the execution device 210 by using a communication network.

The execution device 210 may be implemented by one or more servers. Optionally, the execution device 210 may cooperate with another computing device, for example, a device such as a data memory, a router, or a load balancer. The execution device 210 may be disposed on one physical site, or distributed on a plurality of physical sites. The execution device 210 may implement the neural architecture search method in embodiments of this application by using data in the data storage system 250 or by invoking program code in the data storage system 250.

Specifically, the execution device 210 may execute the following process:

Obtain a to-be-searched perception network and a target search space, where the to-be-searched perception network includes a backbone network, a feature pyramid network FPN, and a header (header), the backbone network is connected to the FPN, the FPN is connected to the header, the backbone network includes a first convolutional layer, the FPN includes a second convolutional layer, the header includes a third convolutional layer, and the target search space includes a plurality of operation types; and perform architecture search for the first convolutional layer in the target search space, perform architecture search for the second convolutional layer in the target search space, and perform architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types.

The execution device 210 may establish a target neural network through the foregoing process, and the target neural network may be used for image classification, image processing, or the like.

Users may operate their user devices (for example, the local device 301 and the local device 302) to interact with the execution device 210. Each local device may be any computing device, such as a personal computer, a computer workstation, a smartphone, a tablet computer, an intelligent camera, an intelligent vehicle, another type of cellular phone, a media consumption device, a wearable device, a set-top box, or a game console.

The local device of each user may interact with the execution device 210 through a communication network compliant with any communication mechanism/communication standard. The communication network may be a wide area network, a local area network, a point-to-point connection, or any combination thereof.

In an implementation, the local device 301 and the local device 302 obtain related parameters of the target neural network from the execution device 210, deploy the target neural network on the local device 301 and the local device 302, and perform image classification, image processing, or the like by using the target neural network.

In another implementation, the target neural network may be directly deployed on the execution device 210. The execution device 210 obtains to-be-processed images from the local device 301 and the local device 302, and performs classification or another type of image processing on the to-be-processed images based on the target neural network.

The execution device 210 may also be referred to as a cloud device. In this case, the execution device 210 is usually deployed on a cloud.

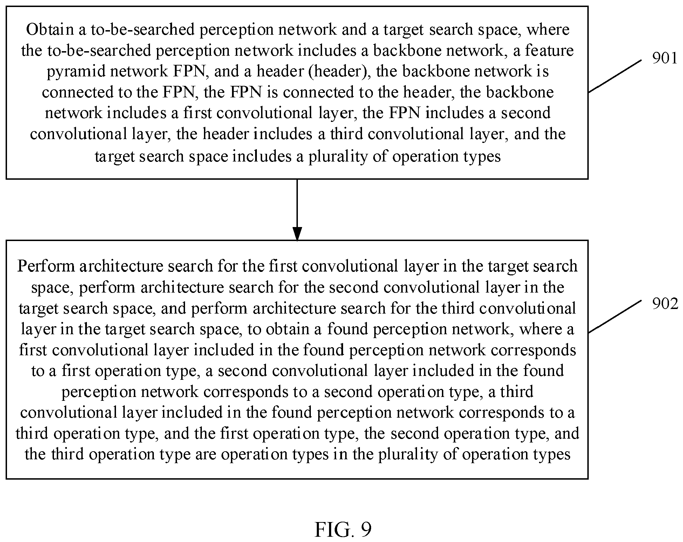

The following first describes in detail the neural network construction method in embodiments of this application with reference to 8b. The method shown in FIG. 9 may be performed by a neural network construction apparatus. The neural network construction apparatus may be an apparatus such as a computer or a server that has a sufficient computing capability for neural network construction.

The method shown in FIG. 9 includes steps 901 to 902. The following separately describes these steps in detail.

901: Obtain a to-be-searched perception network and a target search space. The to-be-searched perception network includes a backbone network, a feature pyramid network FPN, and a header (header). The backbone network is connected to the FPN and the FPN is connected to the header. The backbone network includes a first convolutional layer, the FPN includes a second convolutional layer, the header includes a third convolutional layer, and the target search space includes a plurality of operation (operation) types.

In this embodiment of this application, an architecture of the to-be-searched perception network may be the architecture shown in FIG. 2a, and mainly includes a backbone network (backbone), a feature pyramid network (feature pyramid network, FPN), and a header (header).

In this embodiment of this application, the backbone network (backbone) is configured to receive an input image, perform convolution processing on the input image, and output feature maps that are corresponding to the image and that have different resolutions. That is, feature maps of different sizes corresponding to the image are output. That is, the backbone completes extraction of basic features, to provide corresponding features for subsequent detection.

Specifically, the backbone network may perform a series of convolution processing on an input image, to obtain feature maps (feature map) at different scales. These feature maps provide basic features for a subsequent detection module. The backbone network may use a plurality of forms, for example, a visual geometry group (visual geometry group, VGG), a residual neural network (residual neural network, resnet), and a core architecture (Inception-net) of GoogLeNet.

The backbone network may perform convolution processing on the input image to generate several convolutional feature maps at different scales. Each feature map is an $H \times W \times C$ matrix, where H is the height of the feature map, W is the width of the feature map, and C is the channel quantity of the feature map.

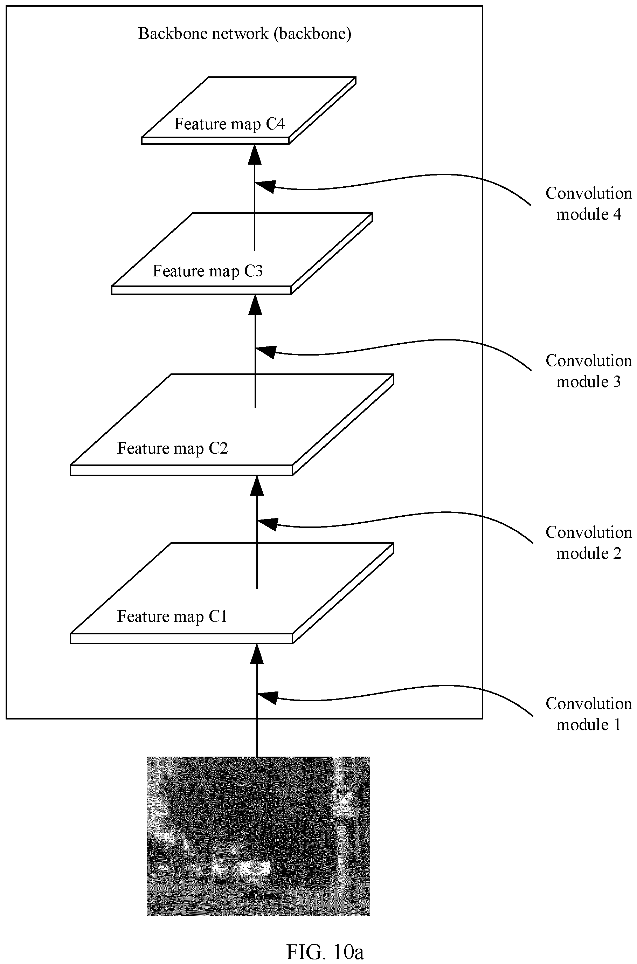

The backbone may use a plurality of existing convolutional network frameworks, such as VGG16, Resnet50, and Inception-Net. The following uses Resnet18 being the backbone as an example for description. The procedure is shown in FIG. 10a.

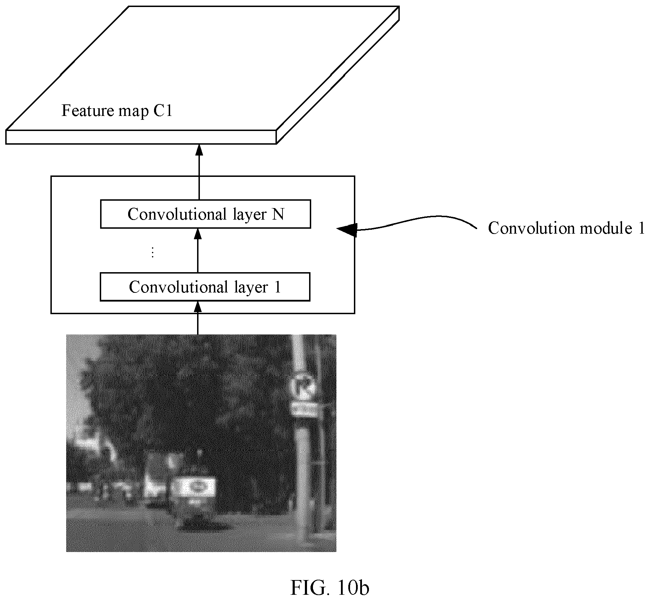

It is assumed that resolution of the input image is $H \times W \times 3$ (height: H; width: W; channel quantity: 3, that is, three RBG channels). The first convolution module Res18-Conv1 (a convolution module 1 in the figure) of Resnet18 performs a convolution operation on the input image to generate a Featuremap (feature map) C1. The feature map is downsampled twice relative to the input image, and the channel quantity is expanded to 64. Therefore, resolution of C1 is $H/4 \times W/4 \times 64$. The convolution module 1 includes several convolutional layers, and a subsequent convolution module is similar. Refer to FIG. 10b. FIG. 10b is a schematic diagram depicting a structure of a convolution module. As shown in FIG. 10b, the convolution module 1 may include a plurality of convolutional layers (a convolutional layer 1 to a convolutional layer N). A convolution operation is performed on C1 by the second convolution module Res18-Conv2 of Resnet18 (a convolution module 2 in the figure), to obtain a Featuremap C2. Resolution of the feature map is consistent with that of C1. C2 continues to be processed by the third convolution module Res18-Conv3 (a convolution module 3 in the figure) of Resnet18 to generate a Featuremap C3. The feature map is further downsampled relative to C2, a channel quantity is doubled, and resolution of the feature map is $H/8 \times W/8 \times 128$. Finally, C3 is processed by Res18-Conv4 (a convolution module 4 in the figure), to generate a Featuremap C4, and resolution of the Featuremap C4 is $H/16 \times W/16 \times 256$.

It can be learned from FIG. 10a that Resnet18 performs convolution processing on the input image at a plurality of layers, to obtain feature maps at different scales: C1/C2/C3/C4. A bottom-layer feature map has a larger width and height and fewer channels, and mainly includes low-layer features (such as an image edge and a texture feature) of an image. A high-layer feature map has a smaller width and height and more channels, and mainly includes high-layer features (such as a shape or an object feature) of the image. In a subsequent 2D detection process, further prediction is performed based on these feature maps.

In this embodiment of this application, the backbone network (backbone) includes a plurality of convolution modules, each convolution module includes a plurality of convolutional layers, and each convolution module may perform convolution processing on an input feature map, to obtain feature maps with different resolutions. In embodiments of this application, the first convolutional layer included in the backbone network (backbone) is one of the plurality of convolutional layers included in the backbone network (backbone).

It should be noted that the backbone network in this embodiment of this application may also be referred to as a back bone network. This is not limited herein.

It should be noted that the backbone network (backbone) shown in FIG. 10a and FIG. 10b is merely an implementation, and does not constitute a limitation on this application.

In this embodiment of this application, the FPN is connected to the backbone network (backbone), and the FPN may perform convolution processing on the plurality of feature maps with different resolutions that are generated by the backbone network (backbone), to construct a feature pyramid.

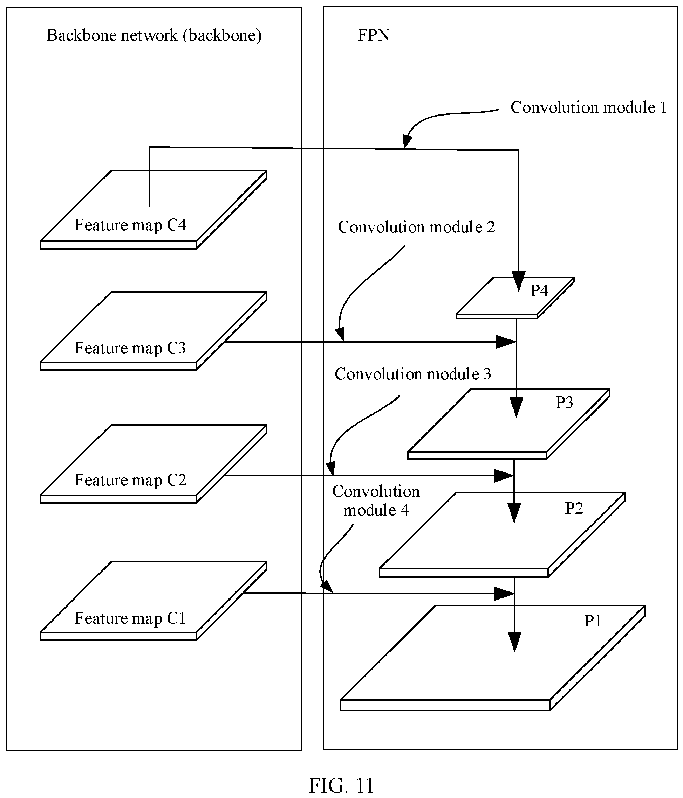

Refer to FIG. 11. FIG. 11 is a schematic diagram depicting an architecture of an FPN. A convolution module 1 is used to process a top-most feature map C4. The convolution module 1 may include at least one convolutional layer. For example, the convolution module 1 may reduce a channel quantity of the top-most feature map C4 to 256 by using dilated convolution and $1\times1$ convolution, and the processing result is used as a top-most feature map P4 of the feature pyramid. An output result of a feature map C3 at a layer beneath the top-most layer is horizontally linked and a channel quantity is reduced to 256 by using $1\times1$ convolution (a convolution module 2), and the processing result is added to the feature map p4 pixel by pixel to obtain a feature map p3. By analogy, a feature pyramid $\Phi p=\{$feature map p4, feature map p3, feature map p2, feature map p1$\}$ is constructed from top to bottom.

In this embodiment of this application, the FPN includes a plurality of convolution modules, each convolution module includes a plurality of convolutional layers, and each convolution module may perform convolution processing on an input feature map. In embodiments of this application, the second convolutional layer included in the FPN is one of the plurality of convolutional layers included in the FPN.

It should be noted that the FPN shown in FIG. 11 is merely an implementation, and does not constitute a limitation on this application.

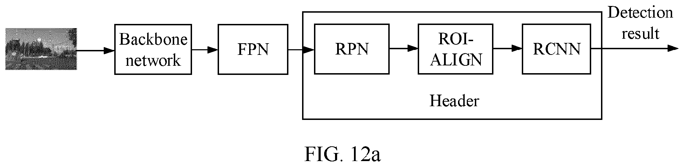

In this embodiment of this application, the header is connected to the FPN. The header may complete detection of a 2D box of a task based on a feature map provided by the FPN, and output a 2D box of an object of the task, a corresponding confidence level, and the like. The following describes a schematic diagram depicting an architecture of a header. Refer to FIG. 12a. FIG. 12a is a schematic diagram of a header. As shown in FIG. 12a, the header includes three modules: a region proposal network (Region Proposal Network, RPN), an ROI-ALIGN, and an RCNN.

The RPN module may be configured to predict, on one or more feature maps provided by the FPN, a region in which the task object is located, and output a candidate 2D box matching the region. Alternatively, it may be understood that the RPN predicts, on one or more horizontal images output by the FPN, regions in which the task object may exist, and provides boxes of these areas. These regions are referred to as region proposals (Proposal). For example, when the header is responsible for detecting a vehicle, the RPN layer of the header predicts a proposal box in which a vehicle may exist. When the header is responsible for detecting a person, the RPN layer of the header predicts a proposal box in which a person may exist. Of course, these proposals are inaccurate. On the one hand, they do not necessarily contain the object of the task. On the other hand, these boxes are not compact.

The 2D region proposal prediction process may be implemented by the RPN module of the header. The RPN module predicts, based on a feature map provided by the FPN, regions in which the task object may exist, and provides proposal boxes of these regions (which may also be referred to as regional proposals, Proposal). In this embodiment, if the header is responsible for detecting a vehicle, the RPN layer of the header predicts a proposal box in which a vehicle may exist.

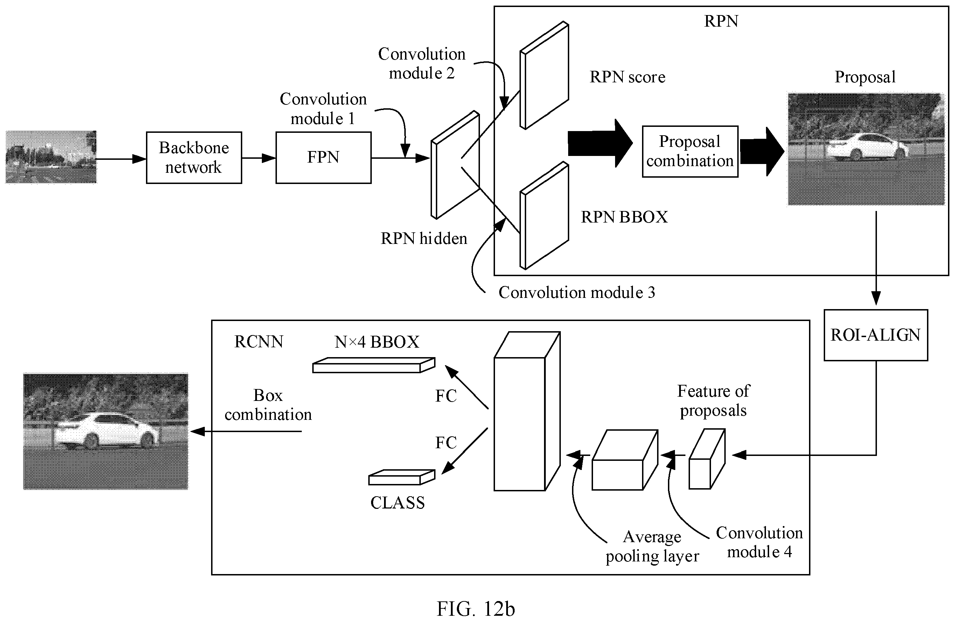

A basic structure of the RPN layer may be shown in FIG. 12b. A feature map RPNHidden is generated by using a convolution module 1 (for example, $3\times3$ convolution) on a feature map provided by the FPN. The RPN layer of the header predicts proposals from the RPN Hidden. Specifically, the RPN layer of the header separately predicts coordinates and a confidence level of a proposal at each location of the RPN Hidden by using a convolution module 2 and a convolution module 3 (for example, each is $1\times1$ convolution). A higher confidence level indicates a higher probability that an object of the task exists in the proposal. For example, a higher score of a proposal in the header indicates a higher probability that a vehicle exists in the proposal. All proposals predicted at the RPN layer need to be combined through a proposal combination module. Redundant proposals are removed based on an overlapping degree of the proposals (this process can use but is not limited to an NMS algorithm), and N proposals with highest scores are selected, as region proposals in which the object may exist, from the remaining K proposals (N<K). It could be seen from FIG. 12b that these proposals are inaccurate. On the one hand, they do not necessarily contain the object of the task. On the other hand, these boxes are not compact. Therefore, the RPN module only performs a coarse detection process, and the subsequent RCNN module needs to perform fine classification. When the RPN module regresses the coordinates of the proposal, the RPN does not directly regress absolute values of the coordinates, but regresses to the coordinates relative to an anchor. Higher degrees of matching between the anchors and the actual objects indicate a higher probability of detecting the objects by the RPN.

The ROI-ALIGN module is configured to extract, based on the region obtained through prediction by the RPN module and from a feature map provided by the FPN, features of the region in which the proposal 2D box is located. That is, the ROI-ALIGN module extracts features of a region in which each proposal is located from a feature map based on the proposals provided by the RPN module, and resizes the features to a fixed size to obtain features of each proposal. It may be understood that the ROI-ALIGN module may use feature extraction methods including but not limited to ROI-POOLING (region of interest pooling)/ROI-ALIGN (region of interest extraction)/PS-ROIPOOLING (position-sensitive region of interest pooling)/PS-ROIALIGN (position-sensitive region of interest extraction).

The RCNN module is configured to perform convolution processing on the features of the region in which the proposal 2D box is located by using a neural network, to obtain a confidence level of a proposal 2D box in each object category; adjust coordinates of the 2D boxes of the region proposals by using the neural network, so that adjusted 2D proposal boxes better match an actual shape of the object than the proposal 2D boxes; and select an adjusted 2D proposal box with a confidence level higher than a preset threshold as the 2D box of the region. That is, the RCNN module refines features of each proposal proposed by the ROI-ALIGN module, to obtain a confidence level of each proposal in each category (for example, for a vehicle task, four scores corresponding to Background/Car/Truck/Bus are provided). In addition, coordinates of the 2D box of the proposal are adjusted to output a more compact 2D box. After being combined through non-maximum suppression (non maximum suppression, NMS), these 2D boxes are output as a final 2D box.

Fine classification of 2D region proposals is mainly implemented by the RCNN module of the header in FIG. 12a. The RCNN module further regresses, based on features of each proposal extracted by the ROI-ALIGN module, coordinates of a more compact 2D box, categorizes the proposal, and outputs a confidence level of the proposal in each category. The RCNN may be implemented in many forms, and one of the implementations is shown in FIG. 12b. A size of the features output by the ROI-ALIGN module may be $N \times 14 \times 14 \times 256$ (Feature of proposals). The features are first processed by a convolution module 4 of Resnet18 (Res18-Conv5) in the RCNN module, and a size of output features is $N \times 7 \times 7 \times 512$. Then, a Global Avg Pool (average pooling layer) is used for processing, and $7 \times 7$ features in each channel of the input features are averaged to obtain $N \times 512$ features. Each $1 \times 512$-dimensional feature vector represents a feature of each proposal. Then, precise coordinates of a box (an $N \times 4$ vector is output and the four scores indicate the x/y coordinates of the center point of the box and the width and height of the box) and a confidence level of the box (which is in Header0, and scores corresponding to Background/Car/Truck/Bus of the box should be provided) are regressed through two fully connected layers FC. Finally, several boxes with the highest scores are selected through a box combination operation, and duplicate boxes are removed through an NMS operation, to obtain an output of a compact box.

In some actual application scenarios, the perception network may further include another header, and 3D/mask/keypoint detection may be further performed on the basis of detecting a 2D box. In an example of 3D, the ROI-ALIGN module extracts, based on the accurate 2D box provided by the header and from the feature map output by the FPN, features of a region in which each 2D box is located. It is assumed that a quantity of 2D boxes is M. In this case, a size of features output by the ROI-ALIGN module is $M \times 14 \times 14 \times 256$. The features are first processed by a convolution module 5 (for example, Res18-Conv5) of Resnet18, and a size of output features is $N \times 7 \times 7 \times 512$. Then, Global Avg Pool (average pooling layer) is used for processing, and $7 \times 7$ features of each channel in the input features are averaged to obtain $M \times 512$ features. Each $1 \times 512$-dimensional feature vector represents a feature of each 2D box. Next, an angle of orientation (orientation, $M \times 1$ vector), coordinates of a centroid (centroid, $M \times 2$ vector, where the two values represent x/y coordinates of the centroid), and a length, width, and height (dimention) of an object in the box are respectively regressed by using three fully connected layers FC.

In this embodiment of this application, the header includes at least one convolution modules, each convolution module includes at least one convolutional layers, and each convolution module may perform convolution processing on an input feature map. In embodiments of this application, the third convolutional layer included in the header is one of the plurality of convolutional layers included in the header.

It should be noted that the header shown in FIG. 12a and FIG. 12b is merely an implementation, and does not constitute a limitation on this application.

In this embodiment of this application, the target search space further needs to be obtained. The target search space may be determined based on an application requirement of the to-be-searched perception network. Specifically, the target search space may be determined based on a type of processing data of the to-be-searched perception network.

For example, when the to-be-searched perception network is a neural network for image data processing, types and quantities of operations included in the target search space need to adapt to image data processing. The target search space may include a plurality of preset operation types in the convolutional neural network. The operation type may be a basic operation or combination of basic operations. The basic operation and combination of basic operations may be collectively referred to as an operation type.

For example, the target search space may include but is not limited to operation types such as convolution, pooling, and residual connection. For example, the target search space may include the following operation types: $1 \times 3$ and $3 \times 1$ convolution, $1 \times 7$ and $7 \times 1$ convolution, $3 \times 3$ dilated convolution, $3 \times 3$ average pooling, $3 \times 3$ max pooling, $5 \times 5$ max pooling, $7 \times 7$ max pooling, $1 \times 1$ convolution, $3 \times 3$ convolution, $3 \times 3$ separable conv, $5 \times 5$ separable conv, $7 \times 7$ separable conv, skip connection operation, zero operation (zero, all neurons in corresponding positions are zeroed), and the like.

For example, $3 \times 3$ average pooling indicates average pooling with a pooling kernel size $3 \times 3$; $3 \times 3$ max pooling indicates maximum pooling with a pooling kernel size $3 \times 3$; $3 \times 3$ dilated convolution indicates dilated convolution with a convolution kernel size $3 \times 3$ and a dilation rate 2; $3 \times 3$ separable conv indicates separate convolution with a convolution kernel size $3 \times 3$; and $5 \times 5$ separable conv indicates separable convolution with a convolution kernel size $5 \times 5$.

In this embodiment of this application, after the to-be-searched perception network and the target search space are obtained, the operation type corresponding to the convolutional layer included in the to-be-searched perception network may be determined through architecture search.

902: Perform architecture search for the first convolutional layer in the target search space, perform architecture search for the second convolutional layer in the target search space, and perform architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types.

In this embodiment of this application, after the to-be-searched perception network and the target search space are obtained, architecture search may be performed for the first convolutional layer in the target search space, architecture search may be performed for the second convolutional layer in the target search space, and architecture search may be performed for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types.

An object on which architecture search is performed is first described.

As described in the foregoing embodiment, the to-be-searched perception network may include a plurality of convolutional layers. The backbone network includes a plurality of convolutional layers, the FPN includes a plurality of convolutional layers, and the header includes a plurality of convolutional layers. In this embodiment, a part or all of the convolutional layers included in the backbone network may be used as an object of architecture search, a part or all of the convolutional layers included in the FPN are used as an object of architecture search, and a part or all of the convolutional layers included in the header are used as an object of architecture search. It should be noted that, if more convolutional layers are selected for architecture search, a found perception network is better. However, extra memory overheads are consumed.

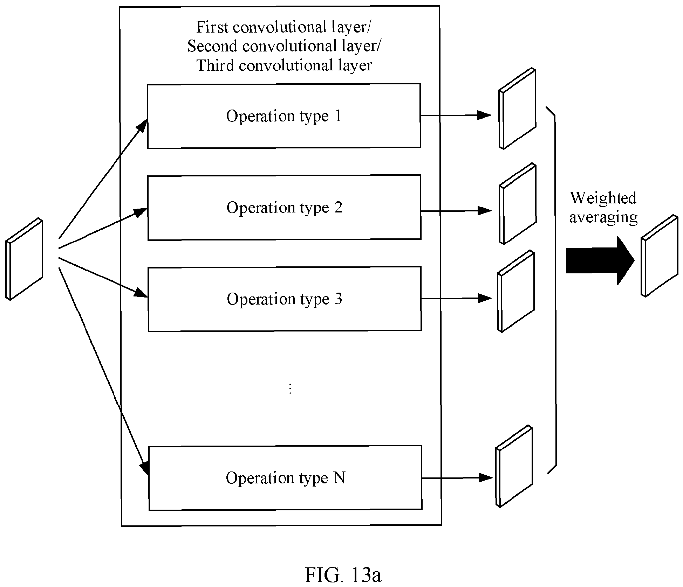

In this embodiment of this application, refer to FIG. 13a. FIG. 13a is a schematic diagram of an architecture search process in this embodiment. As shown in FIG. 13a, a search space corresponding to a convolutional layer (the first convolutional layer, the second convolutional layer, or the third convolutional layer) includes an operation type 1, an operation type 2, ..., and an operation type N. When feedforward is performed on the to-be-searched perception network, a feature map is input to the convolutional layer, and convolution processing is separately performed by using the operation type 1, the operation type 2, ..., and the operation type N included in the search space, to obtain N feature maps after convolution processing. Weighted averaging is performed on the N feature maps. A part or all of the convolutional layers in the backbone network may be selected for architecture search, a part or all of the convolutional layers in the FPN may be selected for architecture search, and a part or all of the convolutional layers in the header may be selected for architecture search. The foregoing processing manner is used for each convolutional layer of the to-be-searched perception network, and a feature map obtained after weighted averaging is used as an output feature map of the convolutional layer. When weighted averaging is performed for each convolutional layer (the first convolutional layer, the second convolutional layer, or the third convolutional layer), each operation type in the corresponding search space corresponds to a weight value. When architecture search is started, each weight value has an initial value. After feedforward is performed, a processing result may be obtained. The processing result is compared with a true value to obtain a loss (loss) and a gradient is calculated. Then a weight value corresponding to each operation type included a search space corresponding to a convolutional layer that is in the to-be-searched perception network and for which architecture search is performed is updated. After iteration for specific times, a weight value corresponding to each operation type included a search space corresponding to a convolutional layer that is in the to-be-searched perception network and for which architecture search is performed is obtained. For each convolutional layer for which architecture search needs to be performed, it may be determined that an operation type of the convolutional layer is an operation type corresponding to a maximum weight value.

In this embodiment of this application, the backbone network includes a plurality of convolutional layers, the first convolutional layer is one of the plurality of convolutional layers included in the backbone network, and architecture search is performed on the to-be-searched perception network in the target search space, to determine an operation type corresponding to each convolutional layer in the plurality of convolutional layers included in the backbone network, the second operation type corresponding to the second convolutional layer, and the third operation type corresponding to the third convolutional layer.

In this embodiment of this application, the FPN includes a plurality of convolutional layers, the second convolutional layer is one of the plurality of convolutional layers included in the FPN, and architecture search is performed on the to-be-searched perception network in the target search space, to obtain the first operation type corresponding to the first convolutional layer, an operation type corresponding to each of the plurality of convolutional layers included in the FPN, and the third operation type corresponding to the third convolutional layer.

In this embodiment of this application, the header includes a plurality of convolutional layers, the third convolutional layer is one of the plurality of convolutional layers included in the header, and architecture search is performed on the to-be-searched perception network in the target search space, to obtain the first operation type corresponding to the first convolutional layer, the second operation type corresponding to the second convolutional layer, and an operation type corresponding to each of the plurality of convolutional layers included in the header.

In an embodiment, architecture search may be performed on all convolutional layers included in the backbone network, architecture search may be performed on a part of convolutional layers included in the FPN, and architecture search may be performed on a part of convolutional layers included in the header.

In an embodiment, architecture search may be performed on a part of convolutional layers included in the backbone network, architecture search may be performed on all convolutional layers included in the FPN, and architecture search may be performed on a part of convolutional layers included in the header.

In an embodiment, architecture search may be performed on a part of convolutional layers included in the backbone network, architecture search may be performed on a part of convolutional layers included in the FPN, and architecture search may be performed on all convolutional layers included in the header.

In an embodiment, architecture search may be performed on all convolutional layers included in the backbone network, architecture search may be performed on all convolutional layers included in the FPN, and architecture search may be performed on a part of convolutional layers included in the header.

In an embodiment, architecture search may be performed on a part of convolutional layers included in the backbone network, architecture search may be performed on all convolutional layers included in the FPN, and architecture search may be performed on all convolutional layers included in the header.

In an embodiment, architecture search may be performed on all convolutional layers included in the backbone network, architecture search may be performed on a part of convolutional layers included in the FPN, and architecture search may be performed on all convolutional layers included in the header.

In an embodiment, architecture search may be performed on all convolutional layers included in the backbone network, architecture search may be performed on all convolutional layers included in the FPN, and architecture search may be performed on all convolutional layers included in the header.

For example, it is assumed that the backbone network (backbone) has L convolutional layers, the FPN has M convolutional layers, and the header has N convolutional layers. The $\alpha$, $\beta$, $\gamma$ are two-dimensional arrays L×8, M×8, and N×8. Each number represents a weight value of each operation type in the search space at each layer, and a larger weight value indicates a higher probability of being selected. The three parameters $\alpha$, $\beta$, $\gamma$ are updated together in the architecture search process, and a corresponding loss function may be:

$$\min_{\alpha,\beta,\gamma} \mathcal{L}_{val}^{det}(\alpha,\beta,\gamma,w^*(\alpha,\beta,\gamma)) + \lambda(C(\alpha)+C(\beta)+C(\gamma))$$

C() is a calculation amount or a parameter quantity, and this part is optional. If a requirement on the calculation amount or the parameter quantity is specified in advance, this part may be included. After architecture search training is iterated by using the loss function for specific times, optimized parameters $\alpha$, $\beta$, $\gamma$ are obtained. By selecting operation types corresponding to maximum $\alpha$, $\beta$, $\gamma$ of each convolutional layer, architectures of the three parts in the to-be-searched perception network that are found through architecture search may be obtained.

In this embodiment of this application, the target search space corresponding to the convolutional layers includes a large quantity of operation types. If architecture search is directly performed based on all the operation types included in the target search space, a large amount of memory is consumed.

In this embodiment of this application, when architecture search is performed, a search space corresponding to the first convolutional layer is a first sub-search space, a search space corresponding to the second convolutional layer is a second sub-search space, or a search space corresponding to the third convolutional layer is a third sub-search space. The first sub-search space, the second sub-search space, and the third sub-search space are subsets of the target search space.

Specifically, a first sub-search space corresponding to the first convolutional layer may be obtained, where the first sub-search space includes a part or all of the plurality of operation types, and architecture search for the first convolutional layer is performed in the first sub-search space, to obtain the first operation type corresponding to the first convolutional layer, where the first operation type is one of operation types included in the first sub-search space; and/or a second sub-search space corresponding to the second convolutional layer may be obtained, where the second sub-search space includes a part or all of the plurality of operation types, and architecture search for the second convolutional layer is performed in the second sub-search space, to obtain the second operation type corresponding to the second convolutional layer, where the second operation type is one of operation types included in the second sub-search space; and/or a third sub-search space corresponding to the third convolutional layer may be obtained, where the third sub-search space includes a part or all of the plurality of operation types, and architecture search for the third convolutional layer is performed in the third sub-search space, to obtain the third operation type corresponding to the third convolutional layer, where the third operation type is one of operation types included in the third sub-search space.

That is, for a convolutional layer or a network architecture (the backbone network, the FPN, or the header), a subset (which may be referred to as a sub-search space below) of the target search space may be used as a search space correspondingly used during architecture search for the convolutional layer or the network architecture. The following describes how to determine the foregoing subset. This embodiment describes the following two cases: 1. Determine a sub-search space corresponding to each convolutional layer for which architecture search needs to be performed; 2. Determine a sub-search space corresponding to each network architecture (the backbone network, the FPN, and the header).

1. Determine a sub-search space corresponding to each convolutional layer for which architecture search needs to be performed

In this embodiment of this application, a first weight value that is of each of the plurality of operation types included in the target search space and that corresponds to the first convolutional layer may be obtained, where the first weight value indicates a capability of an operation type to affect an output result of the to-be-searched perception network, and the first sub-search space corresponding to the first convolutional layer is obtained from the target search space according to the first weight value corresponding to the first convolutional layer; a second weight value that is of each of the plurality of operation types included in the target search space and that corresponds to the second convolutional layer may be obtained, and the second sub-search space corresponding to the second convolutional layer is obtained from the target search space according to the first weight value corresponding to the second convolutional layer; and a first weight value that is of each of the plurality of operation types included in the target search space and that corresponds to the third convolutional layer may be obtained, and the third sub-search space corresponding to the third convolutional layer is obtained from the target search space according to the first weight value corresponding to the third convolutional layer.

For each convolutional layer, an input feature map is x, and the target search space may include N operation types as candidates. The feature map x is input to the N operation types, and N feature maps $\{y_1, y_2,..., y_N\}$ are output. $\alpha$ may be used as a weight value to perform weighted summation on the N feature maps:

$$y = \alpha_1 y_1 + \alpha_2 y_2 + \cdots + \alpha_N y_N$$

An output feature map y of the convolutional layer is used as an input feature map of the next layer. After feedforward is performed on the to-be-searched perception network, an inference result is obtained. A loss function in the search process may be:

$$\arg\min_{\alpha} f(\alpha) + \mu\|\alpha\|_{2,1},$$

f($\alpha$) is a recognition loss function during search, for example, but is not limited to a cross entropy loss function. L21 regularization encourages sparsity, and it is easy to select a more appropriate sub-search space. After search training is iterated by using the loss function for specific times, the sparsity parameter $\alpha$ may be obtained. By selecting operation types corresponding to M largest $\alpha$ values, the sub-search space corresponding to the convolutional layer may be extracted. The foregoing $\alpha$ may indicate a capability of the search type to affect an output result of the to-be-searched perception network. A larger $\alpha$ value indicates a greater capability of the search type to affect the output result of the to-be-searched perception network.

It should be noted that, when a sub-search space of a convolutional layer is determined, a weight of the convolutional layer may be set to a preset value during feedforward, and other convolutional layers are set to preset operation types and preset weight values.

In this embodiment of this application, the first sub-search space corresponding to the first convolutional layer may be obtained from the target search space based on a weight value (that is, the foregoing $\alpha$) that is of each operation type included in the target search space and that corresponds to the first convolutional layer, where the weight value indicates a capability of an operation type to affect an output result of the to-be-searched perception network; the second sub-search space corresponding to the second convolutional layer may be determined from the target search space based on a weight value that is of each operation type included in the target search space and that corresponds to the second convolutional layer; and the third sub-search space corresponding to the third convolutional layer may be determined from the target search space based on a weight value that is of each operation type included in the target search space and that corresponds to the determined convolutional layer.

It should be noted that corresponding sub-search spaces may be determined for a part or all of the convolutional layers in the to-be-searched perception network in the foregoing manner.

It should be noted that, for each convolutional layer, an input feature map is processed by using a plurality of operation types during each architecture search. If a plurality of convolutional layers simultaneously perform the step of determining sub-search spaces, a large amount of content is occupied. Therefore, the step of determining a sub-search space of the convolutional layer may be performed in series, that is, sub-search spaces of the convolutional layers are sequentially determined.

In an embodiment, the backbone network further includes a fourth convolutional layer, the FPN further includes a fifth convolutional layer, and the header further includes a sixth convolutional layer. During architecture search, the fourth convolutional layer and the first convolutional layer correspond to a fourth sub-search space;

the fifth convolutional layer and the second convolutional layer correspond to a fifth sub-search space; or

the sixth convolutional layer and the third convolutional layer correspond to a sixth sub-search space.

The fourth sub-search space, the fifth sub-search space, and the sixth sub-search space are subsets of the target search space.

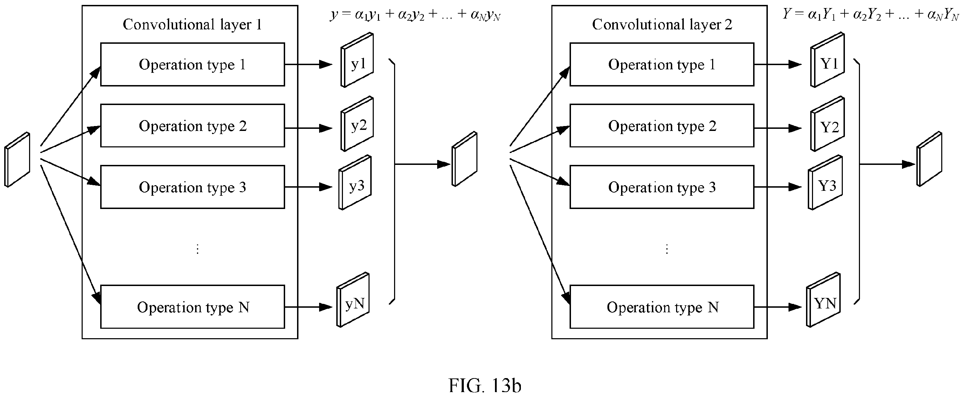

In this embodiment of this application, during architecture search, if a same network architecture includes a plurality of convolutional layers for which architecture search needs to be performed, a weight value corresponding to an operation type may be shared. Specifically, for a convolutional layer 1, a manner of weighted summation is $y = \alpha_1 y_1 + \alpha_2 y_2 + \cdots + \alpha_N y_N$. For a convolutional layer 2 that belongs to the same network architecture as the convolutional layer 1, a manner of weighted summation of the convolutional layer 2 is $Y = \alpha_1 Y_1 + \alpha_2 Y_2 + \cdots + \alpha_N Y_N$. During each iteration, weight values of operation types in the convolutional layer 1 and the convolutional layer 2 are synchronously updated. That is, if an operation type 1 of the convolutional layer 1 corresponds to a weight value 1 during an iteration, an operation type 1 in the convolutional layer 2 also corresponds to the weight value 1. When the weight value is updated, the weight value corresponding to the operation type 1 changes from the weight value 1 to a weight value 2. Correspondingly, the weight value corresponding to the operation type 2 in the convolutional layer 2 is also updated from the weight value 1 to a weight value 2. In the foregoing manner, the sub-search space corresponding to the convolutional layer 1 is the same as the sub-search space corresponding to the convolutional layer 2. Because weight values corresponding to the operation types are shared (for ease of description, the foregoing manner may be described as a weight value sharing manner in this embodiment of this application), a quantity of training parameters in a training process is reduced. For details, refer to FIG. 13b.

It should be noted that an architecture search process in FIG. 13b is merely an example. In actual application, the convolutional layer 1 and the convolutional layer 2 may be directly connected convolutional layers or indirectly connected convolutional layers. This is not limited in this application.

In this embodiment of this application, during architecture search, if a same network architecture includes a plurality of convolutional layers for which architecture search needs to be performed, a corresponding sub-search space may be determined based on a weight value of each convolutional layer. Specifically, for the convolutional layer 1, a manner of weighted summation after iteration is completed is $y = \alpha_1 y_1 + \alpha_2 y_2 + \cdots + \alpha_N Y_N$. For the convolutional layer 2 that belongs to the same network architecture as the convolutional layer 1, a manner of weighted summation after iteration is completed is $Y = \beta_1 Y_1 + \beta_2 Y_2 + \cdots + \beta_N Y_N$. $\alpha_1$ and $\beta_1$ are weight values of the operation type 1. A sum of $\alpha_1$ and $\beta_1$ may be used as a weight value of the operation type 1 jointly corresponding to the convolutional layer 1 and the convolutional layer 2. The foregoing processing may also be performed for another operation type. An operation type corresponding to M weight values with a maximum summation may be determined as sub-search spaces corresponding to the convolutional layer 1 and the convolutional layer 2 (this manner may be referred to as a weight value summation manner in the following embodiments). By using the foregoing method, the sub-search space corresponding to the convolutional layer 1 is the same as the sub-search space corresponding to the convolutional layer 2.

2. Determine sub-search spaces corresponding to each network architecture (the backbone network, FPN, and header).

In this embodiment of this application, a second weight value that is of each of the plurality of operation types included in the target search space and that correspond to the backbone network may be obtained, and the first sub-search space corresponding to the backbone network is determined from the target search space according to the second weight value corresponding to the backbone network, where the second weight value indicates a capability of an operation type to affect an output result of the to-be-searched perception network; a second weight value that is of each of the plurality of operation types included in the target search space and that correspond to the FPN may be obtained, and the second sub-search space corresponding to the FPN is determined from the target search space according to the corresponding second weight value; and a second weight value that is of each of the plurality of operation types included in the target search space and that correspond to the header may be obtained, and the third sub-search space corresponding to the header is determined from the target search space according to the second weight value header corresponding to the header.

In this embodiment of this application, the sub-search space corresponding to each network architecture may be determined through sharing the weight values of the operation types of the convolutional layers included in the network architectures, or through summation of the corresponding weight values. For specific technical details, refer to the descriptions in the foregoing embodiment. Details are not described herein again.

In conclusion, in this embodiment of this application, a manner of determining the sub-search space may include but is not limited to the following manners:

1. Weight values of operation types are not shared between convolutional layers included in a same network architecture, and the convolutional layers correspond to different sub-search spaces, that is, the same network architecture corresponds to a plurality of sub-search spaces.

2. Weight values of operation types are not shared between convolutional layers included in a same network architecture, but some convolutional layers included in the same network architecture correspond to a same sub-search space through weight value summation, and the same network architecture corresponds to a plurality of sub-search spaces.

3. Weight values of operation types are not shared between convolutional layers included in a same network architecture, but all convolutional layers included in the same network architecture correspond to a same sub-search space through weight value summation, and the same network architecture correspond to a same sub-search space.

4. Weight values are shared between some convolutional layers included in a same network architecture, so that some convolutional layer included in the same network architecture correspond to a same sub-search space, and the same network architecture correspond to a plurality of sub-search spaces.

5. Weight values are shared between some convolutional layers included in a same network architecture, but all convolutional layers included in the same network architecture are enabled to correspond to a same sub-search space through weight value summation, and the same network architecture corresponds to a same sub-search space.

6. Weight values of operation types are shared between all convolutional layers included in a same network architecture, but all convolutional layers included in the same network architecture correspond to a same sub-search space through weight value summation, and the same network architecture correspond to a same sub-search space.

In this embodiment of this application, after the sub-search spaces corresponding to all convolutional layers or the network architecture are obtained, architecture search may be performed based on a corresponding sub-search space.

In this embodiment of this application, the terminal device may further include: receiving a first model indicator on a device side, where the first model indicator and a second model indicator include at least one of the following: a model calculation amount FLOPs or a model parameter quantity Parameters; and performing architecture search for the to-be-searched perception network based on the first model indicator and a preset loss, to obtain a found perception model, where the preset loss is related to a model indicator loss, and the model indicator loss indicates a difference between the second model indicator of the to-be-searched perception network and the first model indicator.

In this embodiment of this application, if a user provides a required calculation amount or parameter quantity s, a corresponding loss function during architecture search may be:

$$\min_{\alpha,\beta,\gamma} L_{val}^{det}\big(\alpha,\beta,\gamma,w^*(\alpha,\beta,\gamma)\big) + \lambda\big(C(\alpha) + C(\beta) + C(\gamma) - s\big)^2$$

The penalty term may encourage a small error between the model calculation amount or the parameter quantity for the search and the model calculation amount FLOPs or the model parameter quantity Parameters specified by the user.

In this embodiment of this application, the found perception model may be further sent to the device side.

In this embodiment of this application, weight training may be further performed on the found perception model to obtain a trained perception model, and the trained perception model is sent to the terminal device.

In this embodiment of this application, a perception model is obtained by performing architecture search for the COCO dataset. Compared with an existing method, a perception model with better performance can be obtained in this embodiment of this application when the parameter quantity is the same. It can be learned that compared with the DetNAS-1.3G method in which only the backbone network (backbone) and the header are searched, only the NAS-FPN of the backbone network (backbone) is searched, and only the Auto-FPN of the backbone network (backbone) and the Head is searched, the architecture search method in this embodiment of this application achieves higher mAP. For details, refer to Table 1.

**Table 1 Result statistics on the COCO dataset**

**Table 2. Comparison of the numberof parameters, FLOPs and mAP onCOCO minival. The FLOPs is based on the 800x800 input and 1000 proposals in region proposalnetwork. ‡ means the 2x schedule in training.**

| model | modifed | | | # params (total) | #FLOPs (total) | mAP | $AP_{50}$ | $AP_{75}$ | $AP_S$ | $AP_M$ | $AP_L$ |
|---|---|---|---|---|---|---|---|---|---|---|---|
| | B | N | H | | | | | | | | |
| FPN [24] | - | - | - | 41.76M | 162.3B | 36.2 | 58.0 | 39.1 | 21.3 | 40.0 | 46.1 |
| MobileNetV2 [41] | √√ | | | 19.61M | 34.4B | 30.1 | 51.8 | 30.9 | 16.7 | 33.0 | 38.7 |
| ResNeXt-101 [46] | | | | 60.38M | 238.3B | 40.3 | 62.1 | 44.1 | 23.6 | 45.0 | 51.6 |
| FBNet-C [45] | √ | | | 21.40M | 91.7B | 35.1 | 57.4 | 37.2 | 19.3 | 38.3 | 46.7 |
| DetNAS-1.3G [7] | √ | | √ | 28.45M | 216.1B | 40.2 | 61.5 | 43.6 | 23.3 | 42.5 | 53.8 |
| NASFPN [12] | | √ | | 68.93M | 620.8B | 38.9 | 59.3 | 42.3 | 22.3 | 42.8 | 49.8 |
| DetNAS-1.3G + NASFPN | √ | √ | √ | 55.62M | 674.4B | 39.4 | 59.6 | 42.1 | 23.7 | 43.2 | 50.4 |
| NATS-C [35] | √ | | | 41.76M | 162.3B | 38.4 | 61.0 | 41.2 | 22.5 | 41.8 | 50.4 |
| Auto-FPN‡ [48] | | √ | √ | 32.64M | 476.6B | 40.5 | 61.5 | 43.8 | **25.6** | 44.9 | 51.0 |
| Hit-Detector | √ | √ | √ | 24.85M | 221.6B | **41.4** | **62.4** | **45.9** | 25.2 | **45.0** | **54.1** |

This application provides a perception network architecture search method, including: obtaining a to-be-searched perception network and a target search space, where the to-be-searched perception network includes a backbone network, a feature pyramid network FPN, and a header (header), the backbone network is connected to the FPN, the FPN is connected to the header, the backbone network includes a first convolutional layer, the FPN includes a second convolutional layer, the header includes a third convolutional layer, and the target search space includes a plurality of operation types; and performing architecture search for the first convolutional layer in the target search space, performing architecture search for the second convolutional layer in the target search space, and performing architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types. In the foregoing manner, architecture search is performed on all three network architectures (a part or all of the convolutional layers included in the backbone network, the FPN, and the header) in the to-be-searched perception network, so that performance of the perception network obtained after architecture search is better.

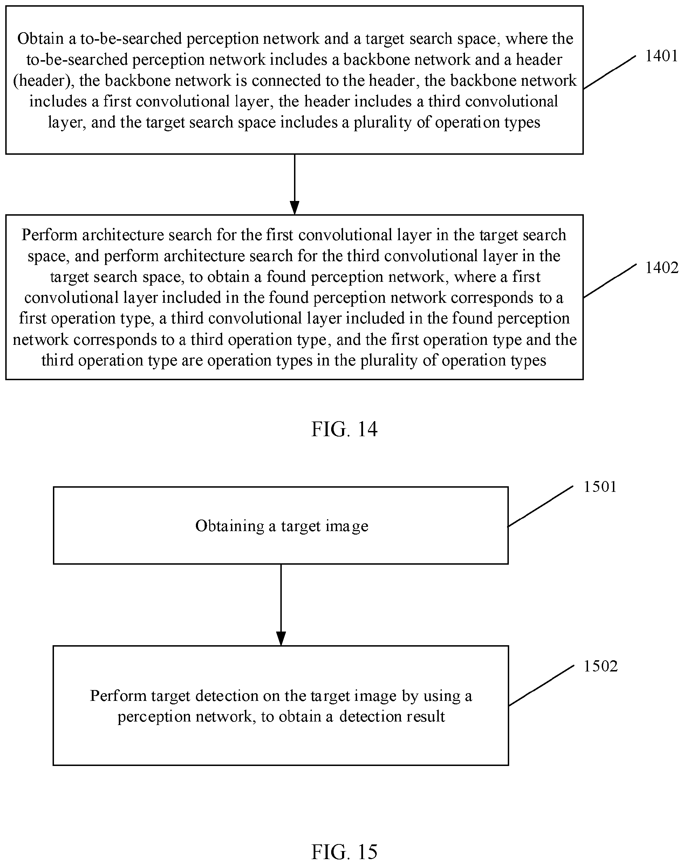

Refer to FIG. 14. FIG. 14 is a schematic flowchart of a perception network architecture search method according to an embodiment of this application. As shown in FIG. 14, the perception network architecture search method according to this embodiment of this application includes the following steps.

1401: Obtain a to-be-searched perception network and a target search space, where the to-be-searched perception network includes a backbone network and a header (header), the backbone network is connected to the header, the backbone network includes a first convolutional layer, the header includes a third convolutional layer, and the target search space includes a plurality of operation types.

Refer to FIG. 2b. Different from the embodiment corresponding to FIG. 9, the architecture of the to-be-searched perception network in this embodiment of this application does not include an FPN, and the backbone network is connected to the header. For other technical details, refer to the descriptions in the embodiment corresponding to FIG. 9. Details are not described herein again.

1402: Perform architecture search for the first convolutional layer in the target search space, and perform architecture search for the third convolutional layer in the target search space, to obtain a found perception network, where a first convolutional layer included in the found perception network corresponds to a first operation type, a third convolutional layer included in the found perception network corresponds to a third operation type, and the first operation type and the third operation type are operation types in the plurality of operation types.

For how to perform architecture search for the to-be-searched perception network in the target search space, refer to the descriptions in the embodiment corresponding to FIG. 9. Details are not described herein again.

Optionally, a first sub-search space corresponding to the first convolutional layer may be obtained, where the first sub-search space is a subset of the target search space; and architecture search is performed for the first convolutional layer in the first sub-search space, to obtain the first operation type corresponding to the first convolutional layer, where the first operation type is one of operation types included in the first sub-search space.

Optionally, a first weight value that is of each of the plurality of operation types included in the target search space and that corresponds to the first convolutional layer may be obtained, where the first weight value indicates a capability of an operation type to affect an output result of the to-be-searched perception network; and the first sub-search space corresponding to the first convolutional layer is obtained from the target search space according to the first weight value corresponding to the first convolutional layer.

Optionally, a second weight value that is of each of the plurality of operation types included in the target search space and that corresponds to the backbone network may be obtained; and the first sub-search space corresponding to the backbone network is determined from the target search space according to the second weight value corresponding to the backbone network, where the second weight value indicates a capability of an operation type to affect an output result of the to-be-searched perception network.

Optionally, the third sub-search space corresponding to the third convolutional layer may be obtained, where the third sub-search space is a subset of the target search space.

Architecture search is performed for the third convolutional layer in the third sub-search space, to obtain the third operation type corresponding to the third convolutional layer, where the third operation type is one of operation types included in the third sub-search space.

Optionally, a first weight value that is of each of the plurality of operation types included in the target search space and that corresponds to the third convolutional layer may be obtained; and the third sub-search space corresponding to the third convolutional layer is obtained from the target search space according to the first weight value corresponding to the third convolutional layer.

Optionally, a second weight value that is of each of the plurality of operation types included in the target search space and that corresponds to the header may be obtained; and the third sub-search space corresponding to the header is determined from the target search space according to the second weight value header corresponding to the header.

Optionally, the backbone network includes a plurality of convolutional layers, the first convolutional layer is one of the plurality of convolutional layers included in the backbone network, and architecture search may be performed on the to-be-searched perception network in the target search space, to determine an operation type corresponding to each convolutional layer in the plurality of convolutional layers included in the backbone network and the third operation type corresponding to the third convolutional layer.

Optionally, the header includes a plurality of convolutional layers, the third convolutional layer is one of the plurality of convolutional layers included in the header, and architecture search is performed on the to-be-searched perception network in the target search space, to obtain the first operation type corresponding to the first convolutional layer and an operation type corresponding to each of the plurality of convolutional layers included in the header.

Optionally, a first model indicator may be received from a device side; and architecture search is performed on the to-be-searched perception network based on the first model indicator and a preset loss until the preset loss meets a preset condition, to obtain a found perception model, where the preset loss is related to a model indicator loss, the model indicator loss indicates a difference between a second model indicator of the to-be-searched perception network and the first model indicator, and the first model indicator and the second model indicator include at least one of the following: a model calculation amount FLOPs or a model parameter quantity Parameters.

Optionally, the found perception model may be sent to the device side.

Optionally, weight training may be performed on the found perception model to obtain a trained perception model; and the trained perception model is sent to the terminal device.

This application provides a perception network architecture search method, including: obtaining a to-be-searched perception network and a target search space, where the to-be-searched perception network includes a backbone network and a header (header), the backbone network is connected to the header, the backbone network includes a first convolutional layer, the header includes a third convolutional layer, and the target search space includes a plurality of operation types; and performing architecture search for the first convolutional layer in the target search space, and performing architecture search for the third convolutional layer in the target search space, to obtain a found perception network, where a first convolutional layer included in the found perception network corresponds to a first operation type, a third convolutional layer included in the found perception network corresponds to a third operation type, and the first operation type and the third operation type are operation types in the plurality of operation types. In the foregoing manner, architecture search is performed on both network architectures (apart or all of the convolutional layers included in the backbone network and the header) in the to-be-searched perception network, so that performance of the perception network obtained after architecture search is better.

FIG. 15 is a schematic flowchart of an image processing method according to an embodiment of this application.

As shown in FIG. 15, the image processing method provided in this embodiment of this application includes the following steps.

1501: Obtain a target image.

1502: Perform target detection on the target image by using a perception network, to obtain a detection result.

The perception network includes a backbone network, a feature pyramid network FPN, and a header (header). The backbone network is connected to the FPN, and the FPN is connected to the header. The backbone network includes a first convolutional layer, the FPN includes a second convolutional layer, and the header includes a third convolutional layer. The first convolutional layer corresponds to a first operation type, the second convolutional layer corresponds to a second operation type, and the third convolutional layer corresponds to a third operation type. A correspondence between the first convolutional layer and the first operation type, a correspondence between the second convolutional layer and the second operation type, and a correspondence between the third convolutional layer and the third operation type are obtained by performing architecture search for a to-be-searched perception network in a target search space.

Alternatively, the perception network includes a backbone network and a header (header). The backbone network is connected to the header. The backbone network includes a first convolutional layer and the header includes a third convolutional layer. The first convolutional layer corresponds to a first operation type and the third convolutional layer corresponds to a third operation type. A correspondence between the first convolutional layer and the first operation type and a correspondence between the third convolutional layer and the third operation type are obtained by performing architecture search for a to-be-searched perception network in a target search space.

The target search space includes a plurality of operation types, and the first operation type, the second operation type, and the third operation type are operation types in the plurality of operation types.

In this embodiment of this application, image processing may be performed on the target image based on the perception network (on which weight value training is performed) obtained by using the perception network architecture search method corresponding to FIG. 9 or FIG. 14, to obtain the detection result.

Optionally, when architecture search is performed, a search space corresponding to the first convolutional layer is a first sub-search space;

a search space corresponding to the second convolutional layer is a second sub-search space; or
a search space corresponding to the third convolutional layer is a third sub-search space.

The first sub-search space and the second sub-search space include a part or all of the plurality of operation types.

This application provides an image processing method, including: obtaining a target image; and performing target detection on the target image by using a perception network, to obtain a detection result. The perception network includes a backbone network, a feature pyramid network FPN, and a header (header). The backbone network is connected to the FPN, and the FPN is connected to the header. The backbone network includes a first convolutional layer, the FPN includes a second convolutional layer, and the header includes a third convolutional layer. The first convolutional layer corresponds to a first operation type, the second convolutional layer corresponds to a second operation type, and the third convolutional layer corresponds to a third operation type. A correspondence between the first convolutional layer and the first operation type, a correspondence between the second convolutional layer and the second operation type, and a correspondence between the third convolutional layer and the third operation type are obtained by performing architecture search for the to-be-searched perception network in the target search space. Alternatively, the perception network includes a backbone network and a header (header). The backbone network is connected to the header. The backbone network includes a first convolutional layer and the header includes a third convolutional layer. The first convolutional layer corresponds to a first operation type and the third convolutional layer corresponds to a third operation type. A correspondence between the first convolutional layer and the first operation type and a correspondence between the third convolutional layer and the third operation type are obtained by performing architecture search for the to-be-searched perception network in the target search space. The target search space includes a plurality of operation types, and the first operation type, the second operation type, and the third operation type are operation types in the plurality of operation types. In the foregoing manner, architecture search is performed on two network architectures (a part or all of the convolutional layers included in the backbone network and the header) in the to-be-searched perception network. In this way, performance of the perception network obtained after architecture search is better.

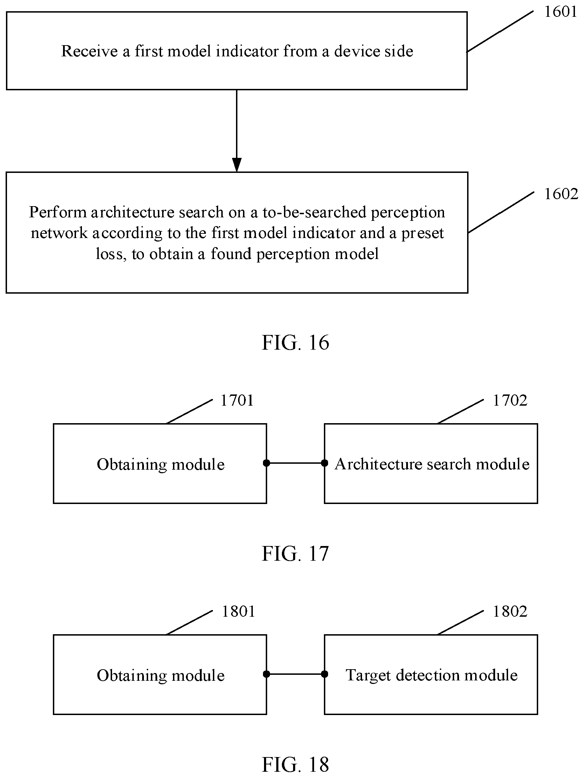

Refer to FIG. 16. FIG. 16 is a schematic flowchart of a perception network architecture search method according to an embodiment of this application. As shown in FIG. 16, the perception network architecture search method according to this embodiment of this application includes the following steps.

1601: Receive a first model indicator from a device side.

1602: Perform architecture search for the to-be-searched perception network based on the first model indicator and a preset loss until the preset loss meets a preset condition, to obtain a found perception model, where the preset loss is related to a model indicator loss, the model indicator loss indicates a difference between a second model indicator of the to-be-searched perception network and the first model indicator, and the first model indicator and the second model indicator include at least one of the following: a model calculation amount FLOPs or a model parameter quantity Parameters.

In this embodiment of this application, if a user provides a required calculation amount or parameter quantity s, a corresponding loss function during architecture search may be:

$$\min_{\alpha,\beta,\gamma} L_{val}^{det}\big(\alpha,\beta,\gamma,w^*(\alpha,\beta,\gamma)\big) + \lambda\big(C(\alpha) + C(\beta) + C(\gamma) - s\big)^2$$

The penalty term may encourage a small error between the model calculation amount or the parameter quantity for the search and the model calculation amount FLOPs or the model parameter quantity Parameters specified by the user.

Optionally, the found perception model may be further sent to the device side.

Optionally, weight training may be further performed on the found perception model to obtain a trained perception model; and the trained perception model is sent to the terminal device.

Based on the embodiments corresponding to FIG. 1 to FIG. 16, to better implement the foregoing solutions in embodiments of this application, the following further provides a related device configured to implement the foregoing solutions. Refer to FIG. 17 for details. FIG. 17 is a schematic diagram depicting a structure of a perception network architecture search apparatus according to an embodiment of this application. The perception network architecture search apparatus may be a server, and the perception network architecture search apparatus includes:

an obtaining module 1701, configured to obtain a to-be-searched perception network and a target search space, where the to-be-searched perception network includes a backbone network, a feature pyramid network FPN, and a header (header), the backbone network is connected to the FPN, the FPN is connected to the header, the backbone network includes a first convolutional layer, the FPN includes a second convolutional layer, the header includes a third convolutional layer, and the target search space includes a plurality of operation types; and

an architecture search module 1702, configured to perform architecture search for the first convolutional layer in the target search space, perform architecture search for the second convolutional layer in the target search space, and perform architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types.

Optionally, the architecture search module is specifically configured to:

obtain a first sub-search space corresponding to the first convolutional layer, where the first sub-search space includes a part or all of the plurality of operation types; and perform architecture search for the first convolutional layer in the first sub-search space, to obtain the first operation type corresponding to the first convolutional layer, where the first operation type is one of operation types included in the first sub-search space; and/or

obtain a second sub-search space corresponding to the second convolutional layer, where the second sub-search space includes a part or all of the plurality of operation types; and perform architecture search for the second convolutional layer in the second sub-search space, to obtain the second operation type corresponding to the second convolutional layer, where the second operation type is one of operation types included in the second sub-search space; and/or

obtain a third sub-search space corresponding to the third convolutional layer, where the third sub-search space includes a part or all of the plurality of operation types; and perform architecture search for the third convolutional layer in the third sub-search space, to obtain the third operation type corresponding to the third convolutional layer, where the third operation type is one of operation types included in the third sub-search space.

Optionally, the architecture search module is specifically configured to:
obtain a first weight value that is of each of the plurality of operation types included in the target search space and that corresponds to the first convolutional layer, where the first weight value indicates a capability of an operation type to affect an output result of the to-be-searched perception network; and obtain, according to the first weight value corresponding to the first convolutional layer, the first sub-search space corresponding to the first convolutional layer from the target search space.

Optionally, the architecture search module is specifically configured to:
obtain a second weight value that is of each of the plurality of operation types included in the target search space and that corresponds to the backbone network; and determine, according to the second weight value corresponding to the backbone network, the first sub-search space corresponding to the backbone network from the target search space, where the second weight value indicates a capability of an operation type to affect an output result of the to-be-searched perception network.

Optionally, the architecture search module is specifically configured to:
obtain a second weight value that is of each of the plurality of operation types included in the target search space and that corresponds to the second convolutional layer; and obtain, according to the first weight value corresponding to the second convolutional layer, the second sub-search space corresponding to the second convolutional layer from the target search space.

Optionally, the architecture search module is specifically configured to:
obtain a second weight value that is of each of the plurality of operation types included in the target search space and that corresponds to the FPN; and determine, according to the corresponding second weight value, the second sub-search space corresponding to the FPN from the target search space.

Optionally, the architecture search module is specifically configured to:
obtain a first weight value that is of each of the plurality of operation types included in the target search space and that corresponds to the third convolutional layer; and obtain, according to the first weight value corresponding to the third convolutional layer, the third sub-search space corresponding to the third convolutional layer from the target search space.

Optionally, the architecture search module is specifically configured to:
obtain a second weight value that is of each of the plurality of operation types included in the target search space and that corresponds to the header; and determine, according to the second weight value header corresponding to the header, the third sub-search space corresponding to the header from the target search space.

Optionally, the backbone network includes a plurality of convolutional layers, the first convolutional layer is one of the plurality of convolutional layers included in the backbone network, and the architecture search module is specifically configured to:
perform architecture search for the to-be-searched perception network in the target search space, to determine an operation type corresponding to each convolutional layer in the plurality of convolutional layers included in the backbone network, the second operation type corresponding to the second convolutional layer, and the third operation type corresponding to the third convolutional layer.

Optionally, the FPN includes a plurality of convolutional layers, the second convolutional layer is one of the plurality of convolutional layers included in the FPN, and the architecture search module is specifically configured to:
perform architecture search for the to-be-searched perception network in the target search space, to determine the first operation type corresponding to the first convolutional layer, an operation type corresponding to each convolutional layer in the plurality of convolutional layers included in the FPN, and the third operation type corresponding to the third convolutional layer.

Optionally, the header includes a plurality of convolutional layers, the third convolutional layer is one of the plurality of convolutional layers included in the header, and the architecture search module is specifically configured to:
perform architecture search for the to-be-searched perception network in the target search space, to determine the first operation type corresponding to the first convolutional layer, the second operation type corresponding to the second convolutional layer, and an operation type corresponding to each of the plurality of convolutional layers included in the header.

Optionally, the apparatus further includes:
a receiving module, configured to receive a first model indicator from a device side.

The architecture search module is specifically configured to:
perform architecture search for the to-be-searched perception network based on the first model indicator and a preset loss until the preset loss meets a preset condition, to obtain a found perception model, where the preset loss is related to a model indicator loss, the model indicator loss indicates a difference between a second model indicator of the to-be-searched perception network and the first model indicator, and the first model indicator and the second model indicator include at least one of the following: a model calculation amount FLOPs or a model parameter quantity Parameters.

Optionally, the apparatus further includes:
a sending module, configured to send the found perception model to the device side.

Optionally, the apparatus further includes:
a weight training module, configured to perform weight training on the found perception model, to obtain a trained perception model.

The sending module is further configured to send the trained perception model to the terminal device.

This application provides a perception network architecture search apparatus. The obtaining module 1701 obtains a to-be-searched perception network and a target search space. The to-be-searched perception network includes a backbone network, a feature pyramid network FPN, and a header (header). The backbone network is connected to the FPN and the FPN is connected to the header. The backbone network includes a first convolutional layer, the FPN includes a second convolutional layer, the header includes a third convolutional layer, and the target search space includes a plurality of operation types. The architecture search module 1702 performs architecture search for the first convolutional layer in the target search space, performs architecture search for the second convolutional layer in the target search space, and performs architecture search for the third convolutional layer in the target search space, to obtain a found perception network. A first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types. In the foregoing manner, architecture search is performed on all three network architectures (a part or all of the convolutional layers included in the backbone network, the FPN, and the header) in the to-be-searched perception network, so that performance of the perception network obtained after architecture search is better.

Refer to FIG. 17. An embodiment of this application provides a perception network architecture search apparatus, including:

an obtaining module 1701, configured to obtain a to-be-searched perception network and a target search space, where the to-be-searched perception network includes a backbone network and a header (header), the backbone network is connected to the header, the backbone network includes a first convolutional layer, the header includes a third convolutional layer, and the target search space includes a plurality of operation types; and

an architecture search module 1702, configured to perform architecture search for the first convolutional layer in the target search space, and perform architecture search for the third convolutional layer in the target search space, to obtain a found perception network, where a first convolutional layer included in the found perception network corresponds to a first operation type, a third convolutional layer included in the found perception network corresponds to a third operation type, and the first operation type and the third operation type are operation types in the plurality of operation types.

Optionally, the architecture search module is specifically configured to:

obtain a first sub-search space corresponding to the first convolutional layer, where the first sub-search space includes a part or all of the plurality of operation types; and perform architecture search for the first convolutional layer in the first sub-search space, to obtain the first operation type corresponding to the first convolutional layer, where the first operation type is one of operation types included in the first sub-search space; and/or
obtain a third sub-search space corresponding to the third convolutional layer, where the third sub-search space includes a part or all of the plurality of operation types; and perform architecture search for the third convolutional layer in the third sub-search space, to obtain the third operation type corresponding to the third convolutional layer, where the third operation type is one of operation types included in the third sub-search space.

Optionally, the architecture search module is specifically configured to:
obtain a first weight value that is of each of the plurality of operation types included in the target search space and that corresponds to the first convolutional layer, where the first weight value indicates a capability of an operation type to affect an output result of the to-be-searched perception network; and obtain, according to the first weight value corresponding to the first convolutional layer, the first sub-search space corresponding to the first convolutional layer from the target search space.

Optionally, the architecture search module is specifically configured to:
obtain a second weight value that is of each of the plurality of operation types included in the target search space and that corresponds to the backbone network; and determine, according to the second weight value corresponding to the backbone network, the first sub-search space corresponding to the backbone network from the target search space, where the second weight value indicates a capability of an operation type to affect an output result of the to-be-searched perception network.

Optionally, the architecture search module is specifically configured to:
obtain a second weight value that is of each of the plurality of operation types included in the target search space and that corresponds to the header; and determine, according to the second weight value header corresponding to the header, the third sub-search space corresponding to the header from the target search space.

Optionally, the backbone network includes a plurality of convolutional layers, the first convolutional layer is one of the plurality of convolutional layers included in the backbone network, and the architecture search module is specifically configured to:
perform architecture search for the to-be-searched perception network in the target search space, to determine an operation type corresponding to each of the plurality of convolutional layers included in the backbone network, and the third operation type corresponding to the third convolutional layer.

Optionally, the header includes a plurality of convolutional layers, the third convolutional layer is one of the plurality of convolutional layers included in the header, and the architecture search module is specifically configured to: perform architecture search for the to-be-searched perception network in the target search space, to determine the first operation type corresponding to the first convolutional layer, and an operation type corresponding to each of the plurality of convolutional layers included in the header.

Optionally, the apparatus further includes:
a receiving module, configured to receive a first model indicator from a device side.

The architecture search module is specifically configured to:
perform architecture search for the to-be-searched perception network based on the first model indicator and a preset loss until the preset loss meets a preset condition, to obtain a found perception model, where the preset loss is related to a model indicator loss, the model indicator loss indicates a difference between a second model indicator of the to-be-searched perception network and the first model indicator, and the first model indicator and the second model indicator include at least one of the following: a model calculation amount FLOPs or a model parameter quantity Parameters.

Optionally, the apparatus further includes:
a sending module, configured to send the found perception model to the device side.

Optionally, the apparatus further includes:
a training module, configured to perform weight training on the found perception model, to obtain a trained perception model.

The sending module is further configured to send the trained perception model to the terminal device.

This application provides a perception network architecture search apparatus. The obtaining module 1701 obtains a to-be-searched perception network and a target search space. The to-be-searched perception network includes a backbone network and a header (header). The backbone network is connected to the header. The backbone network includes a first convolutional layer, the header includes a third convolutional layer, and the target search space includes a plurality of operation types. The architecture search module 1702 performs architecture search for the first convolutional layer in the target search space, and performs architecture search for the third convolutional layer in the target search space, to obtain a found perception network. A first convolutional layer included in the found perception network corresponds to a first operation type, a third convolutional layer included in the found perception network corresponds to a third operation type, and the first operation type and the third operation type are operation types in the plurality of operation types. In the foregoing manner, architecture search is performed on both network architectures (a part or all of the convolutional layers included in the backbone network and the header) in the to-be-searched perception network, so that performance of the perception network obtained after architecture search is better.

Refer to FIG. 18. FIG. 18 is a schematic diagram depicting a structure of an image processing apparatus according to an embodiment of this application. The image processing apparatus may be a terminal device or a server, and the image processing apparatus includes:

an obtaining module 1801, configured to obtain a target image; and
a target detection module 1802, configured to perform target detection on the target image by using a perception network, to obtain a detection result.

The perception network includes a backbone network, a feature pyramid network FPN, and a header (header). The backbone network is connected to the FPN, and the FPN is connected to the header. The backbone network includes a first convolutional layer, the FPN includes a second convolutional layer, and the header includes a third convolutional layer. The first convolutional layer corresponds to a first operation type, the second convolutional layer corresponds to a second operation type, and the third convolutional layer corresponds to a third operation type. A correspondence between the first convolutional layer and the first operation type, a correspondence between the second convolutional layer and the second operation type, and a correspondence between the third convolutional layer and the third operation type are obtained by performing architecture search for a to-be-searched perception network in a target search space.

Alternatively, the perception network includes a backbone network and a header (header). The backbone network is connected to the header. The backbone network includes a first convolutional layer and the header includes a third convolutional layer. The first convolutional layer corresponds to a first operation type and the third convolutional layer corresponds to a third operation type. A correspondence between the first convolutional layer and the first operation type and a correspondence between the third convolutional layer and the third operation type are obtained by performing architecture search for a to-be-searched perception network in a target search space.

The target search space includes a plurality of operation types, and the first operation type, the second operation type, and the third operation type are operation types in the plurality of operation types.

Optionally, when architecture search is performed, a search space corresponding to the first convolutional layer is a first sub-search space;

a search space corresponding to the second convolutional layer is a second sub-search space; or

a search space corresponding to the third convolutional layer is a third sub-search space.

The first sub-search space and the second sub-search space include a part or all of the plurality of operation types.

This embodiment of this application provides an image processing apparatus. The obtaining module 1801 obtains a target image. The target detection module 1802 performs target detection on the target image by using a perception network, to obtain a detection result. The perception network includes a backbone network, a feature pyramid network FPN, and a header (header). The backbone network is connected to the FPN, and the FPN is connected to the header. The backbone network includes a first convolutional layer, the FPN includes a second convolutional layer, and the header includes a third convolutional layer. The first convolutional layer corresponds to a first operation type, the second convolutional layer corresponds to a second operation type, and the third convolutional layer corresponds to a third operation type. A correspondence between the first convolutional layer and the first operation type, a correspondence between the second convolutional layer and the second operation type, and a correspondence between the third convolutional layer and the third operation type are obtained by performing architecture search for the to-be-searched perception network in the target search space. Alternatively, the perception network includes a backbone network and a header (header). The backbone network is connected to the header. The backbone network includes a first convolutional layer and the header includes a third convolutional layer. The first convolutional layer corresponds to a first operation type and the third convolutional layer corresponds to a third operation type. A correspondence between the first convolutional layer and the first operation type and a correspondence between the third convolutional layer and the third operation type are obtained by performing architecture search for the to-be-searched perception network in the target search space. The target search space includes a plurality of operation types, and the first operation type, the second operation type, and the third operation type are operation types in the plurality of operation types. In the foregoing manner, architecture search is performed on all of the two network architectures (a part or all of the convolutional layers included in the backbone network and the header) or three network architectures (a part or all of the convolutional layers included in the backbone network, the FPN, and the header) in the to-be-searched perception network. In this way, performance of the perception network obtained after architecture search is better.

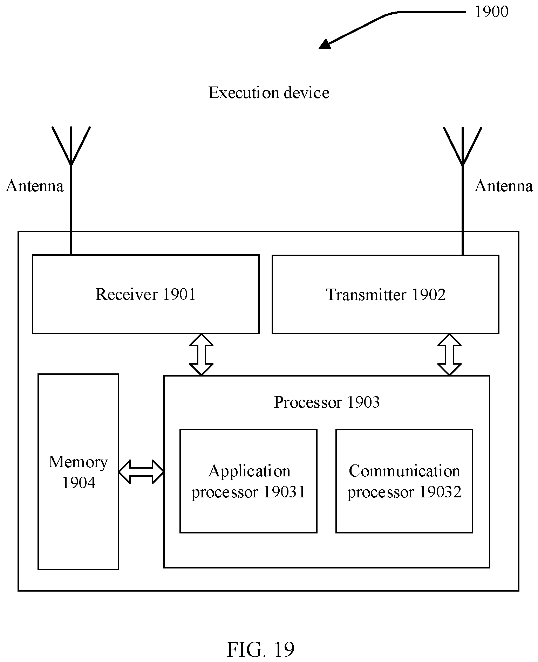

The following describes an execution device provided in an embodiment of this application. Refer to FIG. 19. FIG. 19 is a schematic diagram depicting a structure of an execution device according to an embodiment of this application. The execution device 1900 may be specifically represented as a virtual reality VR device, a mobile phone, a tablet, a notebook computer, an intelligent wearable device, a monitoring data processing device, a server, or the like. This is not limited herein. Specifically, the execution device 1900 includes a receiver 1901, a transmitter 1902, a processor 1903, and a memory 1904 (the execution device 1900 may include one or more processors 1903, and one processor is used as an example in FIG. 19). The processor 1903 may include an application processor 19031 and a communication processor 19032. In some embodiments of this application, the receiver 1901, the transmitter 1902, the processor 1903, and the memory 1904 may be connected through a bus or in another manner.

The memory 1904 may include a read-only memory and a random access memory, and provides an instruction and data for the processor 1903. A part of the memory 1904 may further include a non-volatile random access memory (non-volatile random access memory, NVRAM). The memory 1904 stores a processor and operation instructions, an executable module or a data structure, or a subset thereof or an extended set thereof. The operation instructions may include various operation instructions for implementing various operations.

The processor 1903 controls an operation of the execution device. In specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1903, or may be implemented by the processor 1903. The processor 1903 may be an integrated circuit chip, and has a signal processing capability. In an implementation process, the steps in the foregoing methods may be implemented by using a hardware integrated logical circuit in the processor 1903, or by using instructions in a form of software. The processor 1903 may be a general-purpose processor, a digital signal processor (digital signal processing, DSP), a microprocessor or a microcontroller, and may further include an application-specific integrated circuit (application specific integrated circuit, ASIC), a field programmable gate array (field-programmable gate array, FPGA) or another programmable logic device, a discrete gate or transistor logic device, or a discrete hardware component. The processor 1903 may implement or perform the methods, steps, and logical block diagrams that are disclosed in embodiments of this application. The general-purpose processor may be a microprocessor, any conventional processor, or the like. Steps of the methods disclosed with reference to embodiments of this application may be directly executed and completed by a hardware decoding processor, or may be executed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1904, and the processor 1903 reads information in the memory 1904 and completes the steps in the foregoing methods in combination with hardware in the processor 1903.

The receiver 1901 may be configured to receive input digit or character information, and generate signal input related to a related setting and function control of the execution device. The transmitter 1902 may be configured to output digit or character information through a first interface. The transmitter 1902 may be further configured to send an instruction to a disk group through the first interface, to modify data in the disk group. The transmitter 1902 may further include a display device such as a display screen.

In this embodiment of this application, in one case, the processor 1903 is configured to obtain a target image, and perform target detection on the target image by using a perception network, to obtain a detection result. The perception network includes a backbone network, a feature pyramid network FPN, and a header (header). The backbone network is connected to the FPN, and the FPN is connected to the header. The backbone network includes a first convolutional layer, the FPN includes a second convolutional layer, and the header includes a third convolutional layer. The first convolutional layer corresponds to a first operation type, the second convolutional layer corresponds to a second operation type, and the third convolutional layer corresponds to a third operation type. A correspondence between the first convolutional layer and the first operation type, a correspondence between the second convolutional layer and the second operation type, and a correspondence between the third convolutional layer and the third operation type are obtained by performing architecture search for the to-be-searched perception network in the target search space. Alternatively, the perception network includes a backbone network and a header (header). The backbone network is connected to the header. The backbone network includes a first convolutional layer and the header includes a third convolutional layer. The first convolutional layer corresponds to a first operation type and the third convolutional layer corresponds to a third operation type. A correspondence between the first convolutional layer and the first operation type and a correspondence between the third convolutional layer and the third operation type are obtained by performing architecture search for the to-be-searched perception network in the target search space. The target search space includes a plurality of operation types, and the first operation type, the second operation type, and the third operation type are operation types in the plurality of operation types.

Optionally, when architecture search is performed, a search space corresponding to the first convolutional layer is a first sub-search space; a search space corresponding to the second convolutional layer is a second sub-search space; or a search space corresponding to the third convolutional layer is a third sub-search space. The first sub-search space and the second sub-search space include a part or all of the plurality of operation types.

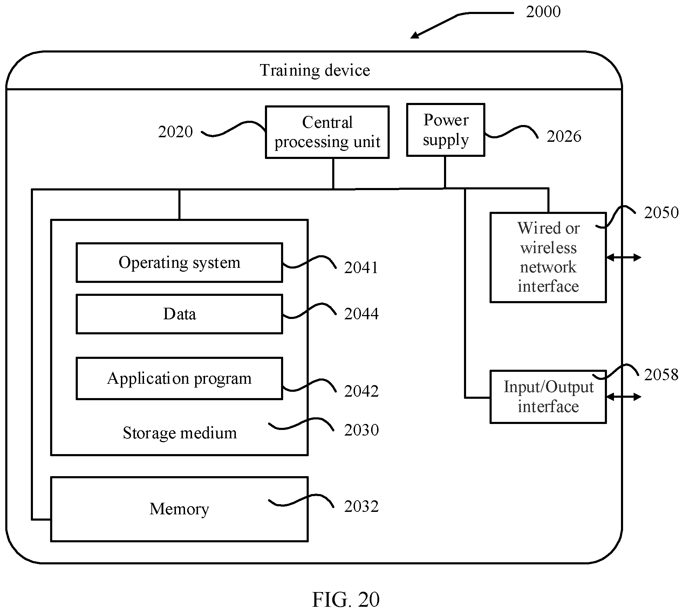

An embodiment of this application further provides a training device. Refer to FIG. 20. FIG. 20 is a schematic diagram depicting a structure of a training device according to an embodiment of this application. The perception network architecture search apparatus described in the embodiment corresponding to FIG. 17 may be deployed on the training device 2000, to implement a function of the perception network architecture search apparatus in the embodiment corresponding to FIG. 17. Specifically, the training device 2000 is implemented by one or more servers. The training device 2000 may vary greatly due to different configurations or performance, may include one or more central processing units (central processing unit, CPU) 2020 (for example, one or more processors), a memory 2032, and one or more storage media 2030 (for example, one or more mass storage devices) that store an application program 2042 or data 2044. The memory 2032 and the storage medium 2030 may be used for temporary storage or permanent storage. The program stored in the storage medium 2030 may include one or more modules (not shown in the figure), and each module may include a series of instruction operations for the training device. Further, the central processing unit 2020 may be configured to communicate with the storage medium 2030, and perform, on the training device 2000, the series of instruction operations in the storage medium 2030.

The training device 2000 may further include one or more power supplies 2026, one or more wired or wireless network interfaces 2050, one or more input/output interfaces 2058, or one or more operating systems 2041, such as Windows Server™, Mac OS X™, Unix™, Linux™ and FreeBSD™.

In this embodiment of this application, the central processing unit 2020 is configured to obtain a to-be-searched perception network and a target search space, where the to-be-searched perception network includes a backbone network, a feature pyramid network FPN, and a header (header), the backbone network is connected to the FPN, the FPN is connected to the header, the backbone network includes a first convolutional layer, the FPN includes a second convolutional layer, the header includes a third convolutional layer, and the target search space includes a plurality of operation (operation) types; and perform architecture search for the first convolutional layer in the target search space, perform architecture search for the second convolutional layer in the target search space, and perform architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing methods described in the foregoing embodiments, or a chip in the training device performs the data processing methods described in the foregoing embodiments. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM).

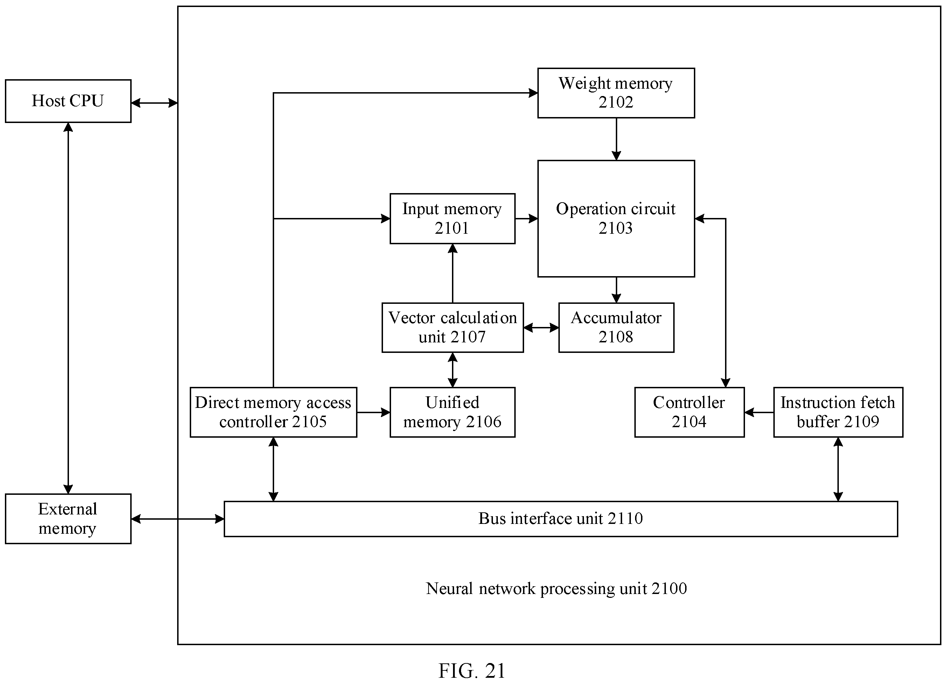

Specifically, refer to FIG. 21. FIG. 21 is a schematic diagram depicting a structure of a chip according to an embodiment of this application. The chip may be represented as a neural network processing unit NPU 2100. The NPU 2100 is mounted to a host CPU (Host CPU) as a coprocessor, and the Host CPU allocates a task. A core part of the NPU is an operation circuit 2103, and a controller 2104 controls the operation circuit 2103 to extract matrix data in a memory and perform a multiplication operation.

In some implementations, the operation circuit 2103 internally includes a plurality of processing units (Process Engine, PE). In some implementations, the operation circuit 2103 is a two-dimensional systolic array. Alternatively, the operation circuit 2103 may be a one-dimensional systolic array or another electronic circuit that can perform mathematical operations such as multiplication and addition. In some implementations, the operation circuit 2103 is a general-purpose matrix processor.

For example, it is assumed that there is an input matrix A, a weight matrix B, and an output matrix C. The operation circuit fetches data corresponding to the matrix B from a weight memory 2102, and buffers the data on each PE in the operation circuit. The operation circuit fetches data of the matrix A from an input memory 2101 to perform a matrix operation on the matrix B, to obtain a partial result or a final result of the matrix, which is stored in an accumulator (accumulator) 2108.

A unified memory 2106 is configured to store input data and output data. Weight data is directly transferred to the weight memory 2102 by using a direct memory access controller (Direct Memory Access Controller, DMAC) 2105. The input data is also transferred to the unified memory 2106 by using the DMAC.

A BIU, bus interface unit, that is, a bus interface unit 2110, is configured for interaction between an AXI bus and the DMAC and interaction between the AXI and an instruction fetch memory (Instruction Fetch Buffer, IFB) 2109.

The bus interface unit 2110 (Bus Interface Unit, BIU for short) is configured to obtain an instruction from an external memory by the instruction fetch buffer 2109, and is further configured to obtain original data of the input matrix A or the weight matrix B from the external memory by the direct memory access controller 2105.

The DMAC is mainly configured to transfer input data in the external memory DDR to the unified memory 2106, transfer weight data to the weight memory 2102, or transfer input data to the input memory 2101.

A vector calculation unit 2107 includes a plurality of operation processing units. If necessary, further processing, for example, vector multiplication, vector addition, exponential operation, logarithmic operation, and size comparison is performed on an output of the operation circuit 2103. The vector calculation unit 2107 is mainly configured to perform network computing, such as batch normalization (batch normalization), pixel-level summation, and upsampling of a feature plane, on a non-convolutional/fully-connected layer in a neural network.

In some implementations, the vector calculation unit 2107 can store a processed output vector in the unified memory 2106. For example, the vector calculation unit 2107 may apply a linear function or a non-linear function to the output of the operation circuit 2103, for example, perform linear interpolation on a feature plane extracted by the convolutional layer, for another example, add value vectors, to generate an activation value. In some implementations, the vector calculation unit 2107 generates a normalized value, a pixel-level summation value, or both. In some implementations, the processed output vector can be used as an activation input for the operation circuit 2103, for example, used in a subsequent layer in the neural network.

The instruction fetch buffer (instruction fetch buffer) 2109 connected to the controller 2104 is configured to store instructions used by the controller 2104.

The unified memory 2106, the input memory 2101, the weight memory 2102, and the instruction fetch buffer 2109 are all on-chip memories. The external memory is private for the NPU hardware architecture.

The processor mentioned anywhere above may be a general-purpose central processing unit, a microprocessor, an ASIC, or one or more integrated circuits configured to control program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods described in embodiments of this application.

All or a part of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the one or more computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Disk, SSD)), or the like.

**Claims**

1. A perception network architecture search method, comprising:

   obtaining a to-be-searched perception network and a target search space, wherein the to-be-searched perception network comprises a backbone network, a feature pyramid network FPN, and a header header, the backbone network is connected to the FPN, the FPN is connected to the header, the backbone network comprises a first convolutional layer, the FPN comprises a second convolutional layer, the header comprises a third convolutional layer, and the target search space comprises a plurality of operation (operation) types;
   performing architecture search for the first convolutional layer in the target search space, performing architecture search for the second convolutional layer in the target search space, and performing architecture search for the third convolutional layer in the target search space, to obtain a found perception network, wherein a first convolutional layer comprised in the found perception network corresponds to a first operation type, a second convolutional layer comprised in the found perception network corresponds to a second operation type, a third convolutional layer comprised in the found perception network corresponds to a third operation type, and the plurality of operation types comprise the first operation type, the second operation type, and the third operation type.

2. The method according to claim 1, wherein the performing architecture search for the first convolutional layer in the target search space comprises: obtaining a first sub-search space corresponding to the first convolutional layer, wherein the first sub-search space comprises a part or all of the plurality of operation types; and performing architecture search for the first convolutional layer in the first sub-search space, to obtain the first operation type corresponding to the first convolutional layer, wherein the first operation type is one of operation types comprised in the first sub-search space; and/or

the performing architecture search for the second convolutional layer in the target search space comprises: obtaining a second sub-search space corresponding to the second convolutional layer, wherein the second sub-search space comprises a part or all of the plurality of operation types; and performing architecture search for the second convolutional layer in the second sub-search space, to obtain the second operation type corresponding to the second convolutional layer, wherein the second operation type is one of operation types comprised in the second sub-search space; and/or
the performing architecture search for the third convolutional layer in the target search space comprises: obtaining a third sub-search space corresponding to the third convolutional layer, wherein the third sub-search space comprises a part or all of the plurality of operation types; and performing architecture search for the third convolutional layer in the third sub-search space, to obtain the third operation type corresponding to the third convolutional layer, wherein the third operation type is one of operation types comprised in the third sub-search space.

3. The method according to claim 2, wherein the obtaining a first sub-search space corresponding to the first convolutional layer comprises:
obtaining a first weight value that is of each of the plurality of operation types comprised in the target search space and that corresponds to the first convolutional layer, wherein the first weight value indicates a capability of an operation type to affect an output result of the to-be-searched perception network; and obtaining, according to the first weight value corresponding to the first convolutional layer, the first sub-search space corresponding to the first convolutional layer from the target search space.

4. The method according to claim 2, wherein the obtaining a first sub-search space corresponding to the first convolutional layer comprises:
obtaining a second weight value that is of each of the plurality of operation types comprised in the target search space and that corresponds to the backbone network, wherein the second weight value indicates a capability of an operation type to affect an output result of the to-be-searched perception network; and determining, according to the second weight value corresponding to the backbone network, the first sub-search space corresponding to the backbone network from the target search space.

5. The method according to any one of claims 2 to 4, wherein the obtaining a second sub-search space corresponding to the second convolutional layer comprises:
obtaining a second weight value that is of each of the plurality of operation types comprised in the target search space and that corresponds to the second convolutional layer; and obtaining, according to the first weight value corresponding to the second convolutional layer, the second sub-search space corresponding to the second convolutional layer from the target search space.

6. The method according to any one of claims 2 to 4, wherein the obtaining a second sub-search space corresponding to the second convolutional layer comprises:
obtaining a second weight value that is of each of the plurality of operation types comprised in the target search space and that corresponds to the FPN, wherein the second weight value indicates a capability of an operation type to affect an output result of the to-be-searched perception network; and determining, according to the corresponding second weight value, the second sub-search space corresponding to the FPN from the target search space.

7. The method according to any one of claims 2 to 6, wherein the obtaining a third sub-search space corresponding to the third convolutional layer comprises:
obtaining a first weight value that is of each of the plurality of operation types comprised in the target search space and that corresponds to the third convolutional layer; and obtaining, according to the first weight value corresponding to the third convolutional layer, the third sub-search space corresponding to the third convolutional layer from the target search space.

8. The method according to any one of claims 2 to 6, wherein the obtaining a third sub-search space corresponding to the third convolutional layer comprises:

obtaining a second weight value that is of each of the plurality of operation types comprised in the target search space and that corresponds to the header; and determining, according to the second weight value header corresponding to the header, the third sub-search space corresponding to the header from the target search space.

9. The method according to any one of claims 1 to 8, wherein the method further comprises:

receiving a first model indicator from a device side; and
performing architecture search on the to-be-searched perception network in the target search space comprises: performing architecture search on the to-be-searched perception network according to the first model indicator and a preset loss until the preset loss meets a preset condition, to obtain a found perception model, wherein the preset loss is related to a model indicator loss, the model indicator loss indicates a difference between a second model indicator of the to-be-searched perception network and the first model indicator, and the first model indicator and the second model indicator comprise at least one of the following: a model calculation amount FLOPs or a model parameter quantity Parameters.

10. A perception network architecture search method, comprising:

obtaining a to-be-searched perception network and a target search space, wherein the to-be-searched perception network comprises a backbone network and a header header, the backbone network is connected to the header, the backbone network comprises a first convolutional layer, the header comprises a third convolutional layer, and the target search space comprises a plurality of operation (operation) types; and
performing architecture search for the first convolutional layer in the target search space, and performing architecture search for the third convolutional layer in the target search space, to obtain a found perception network, wherein a first convolutional layer comprised in the found perception network corresponds to a first operation type, a third convolutional layer comprised in the found perception network corresponds to a third operation type, and the first operation type and the third operation type are operation types in the plurality of operation types.

11. The method according to claim 10, wherein the performing architecture search for the first convolutional layer in the target search space comprises: obtaining a first sub-search space corresponding to the first convolutional layer, wherein the first sub-search space comprises a part or all of the plurality of operation types; and performing architecture search for the first convolutional layer in the first sub-search space, to obtain the first operation type corresponding to the first convolutional layer, wherein the first operation type is one of operation types comprised in the first sub-search space; and/or
the performing architecture search for the third convolutional layer in the target search space comprises: obtaining a third sub-search space corresponding to the third convolutional layer, wherein the third sub-search space comprises a part or all of the plurality of operation types; and performing architecture search for the third convolutional layer in the third sub-search space, to obtain the third operation type corresponding to the third convolutional layer, wherein the third operation type is one of operation types comprised in the third sub-search space.

12. The method according to claim 11, wherein the obtaining a first sub-search space corresponding to the first convolutional layer comprises:
obtaining a first weight value that is of each of the plurality of operation types comprised in the target search space and that corresponds to the first convolutional layer, wherein the first weight value indicates a capability of an operation type to affect an output result of the to-be-searched perception network; and obtaining, according to the first weight value corresponding to the first convolutional layer, the first sub-search space corresponding to the first convolutional layer from the target search space.

13. The method according to claim 11 or 12, wherein the obtaining a third sub-search space corresponding to the third convolutional layer comprises:
obtaining a first weight value that is of each of the plurality of operation types comprised in the target search space and that corresponds to the third convolutional layer; and obtaining, according to the first weight value corresponding to the third convolutional layer, the third sub-search space corresponding to the third convolutional layer from the target search space.

14. An image processing method, wherein the method comprises:

obtaining a target image; and

performing target detection on the target image by using a perception network, to obtain a detection result, wherein

the perception network comprises a backbone network, a feature pyramid network FPN, and a header header, the backbone network is connected to the FPN, the FPN is connected to the header, the backbone network comprises a first convolutional layer, the FPN comprises a second convolutional layer, the header comprises a third convolutional layer, the first convolutional layer corresponds to a first operation type, the second convolutional layer corresponds to a second operation type, the third convolutional layer corresponds to a third operation type, and a correspondence between the first convolutional layer and the first operation type, a correspondence between the second convolutional layer and the second operation type, and a correspondence between the third convolutional layer and the third operation type are obtained by performing architecture search for a to-be-searched perception network in a target search space; or

the perception network comprises a backbone network and a header header, the backbone network is connected to the header, the backbone network comprises a first convolutional layer, the header comprises a third convolutional layer, the first convolutional layer corresponds to a first operation type, the third convolutional layer corresponds to a third operation type, and a correspondence between the first convolutional layer and the first operation type and a correspondence between the third convolutional layer and the third operation type are obtained by performing architecture search for a to-be-searched perception network in a target search space, wherein

the target search space comprises a plurality of operation types, and the first operation type, the second operation type, and the third operation type are operation types in the plurality of operation types.

15. The method according to claim 14, wherein when architecture search is performed, a search space corresponding to the first convolutional layer is a first sub-search space;

a search space corresponding to the second convolutional layer is a second sub-search space; or
a search space corresponding to the third convolutional layer is a third sub-search space, wherein
the first sub-search space and the second sub-search space comprise a part or all of the plurality of operation types.

16. A perception network architecture search apparatus, comprising:

an obtaining module, configured to obtain a to-be-searched perception network and a target search space, wherein the to-be-searched perception network comprises a backbone network, a feature pyramid network FPN, and a header (header), the backbone network is connected to the FPN, the FPN is connected to the header, the backbone network comprises a first convolutional layer, the FPN comprises a second convolutional layer, the header comprises a third convolutional layer, and the target search space comprises a plurality of operation operation types; and

an architecture search module, configured to perform architecture search for the first convolutional layer in the target search space, perform architecture search for the second convolutional layer in the target search space, and perform architecture search for the third convolutional layer in the target search space, to obtain a found perception network, wherein a first convolutional layer comprised in the found perception network corresponds to a first operation type, a second convolutional layer comprised in the found perception network corresponds to a second operation type, a third convolutional layer comprised in the found perception network corresponds to a third operation type, and the plurality of operation types comprise the first operation type, the second operation type, and the third operation type.

17. The apparatus according to claim 16, wherein the architecture search module is specifically configured to:

obtain a first sub-search space corresponding to the first convolutional layer, wherein the first sub-search space comprises a part or all of the plurality of operation types; and perform architecture search for the first convolutional layer in the first sub-search space, to obtain the first operation type corresponding to the first convolutional layer, wherein the first operation type is one of operation types comprised in the first sub-search space; and/or obtain a second sub-search space corresponding to the second convolutional layer, wherein the second sub-search space comprises a part or all of the plurality of operation types; and perform architecture search for the second convolutional layer in the second sub-search space, to obtain the second operation type corresponding to the second convolutional layer, wherein the second operation type is one of operation types comprised in the second sub-search space; and/or obtain a third sub-search space corresponding to the third convolutional layer, wherein the third sub-search space comprises a part or all of the plurality of operation types; and perform architecture search for the third convolutional layer in the third sub-search space, to obtain the third operation type corresponding to the third convolutional layer, wherein the third operation type is one of operation types comprised in the third sub-search space.

18. The apparatus according to claim 17, wherein the architecture search module is specifically configured to:
obtain a first weight value that is of each of the plurality of operation types comprised in the target search space and that corresponds to the first convolutional layer, wherein the first weight value indicates a capability of an operation type to influence an output result of the to-be-searched perception network; and obtain, according to the first weight value corresponding to the first convolutional layer, the first sub-search space corresponding to the first convolutional layer from the target search space.

19. The apparatus according to claim 17, wherein the architecture search module is specifically configured to:
obtain a second weight value that is of each of the plurality of operation types comprised in the target search space and that corresponds to the backbone network, wherein the second weight value indicates a capability of an operation type to influence an output result of the to-be-searched perception network; and determining, according to the second weight value corresponding to the backbone network, the first sub-search space corresponding to the backbone network from the target search space.

20. The apparatus according to any one of claims 17 to 19, wherein the architecture search module is specifically configured to: obtain a second weight value that is of each of the plurality of operation types comprised in the target search space and that corresponds to the second convolutional layer; and obtain, according to the first weight value corresponding to the second convolutional layer, the second sub-search space corresponding to the second convolutional layer from the target search space.

21. The apparatus according to any one of claims 17 to 19, wherein the architecture search module is specifically configured to:
obtain a second weight value that is of each of the plurality of operation types comprised in the target search space and that corresponds to the FPN, wherein the second weight value indicates a capability of an operation type to influence an output result of the to-be-searched perception network; and determine, according to the corresponding second weight value, the second sub-search space corresponding to the FPN from the target search space.

22. The apparatus according to any one of claims 17 to 21, wherein the architecture search module is specifically configured to:
obtain a first weight value that is of each of the plurality of operation types comprised in the target search space and that corresponds to the third convolutional layer; and obtain, according to the first weight value corresponding to the third convolutional layer, the third sub-search space corresponding to the third convolutional layer from the target search space.

23. The apparatus according to any one of claims 17 to 21, wherein the architecture search module is specifically configured to:
obtain a second weight value that is of each of the plurality of operation types comprised in the target search space and that corresponds to the header; and determining, according to the second weight value header corresponding to the header, the third sub-search space corresponding to the header from the target search space.

24. The apparatus according to any one of claims 16 to 23, wherein the apparatus further comprises:

a receiving module, configured to receive a first model indicator from a device side; and
the architecture search module is specifically configured to:
perform architecture search on the to-be-searched perception network according to the first model indicator and a preset loss until the preset loss meets a preset condition, to obtain a found perception model, wherein the preset loss is related to a model indicator loss, the model indicator loss indicates a difference between a second model indicator of the to-be-searched perception network and the first model indicator, and the first model indicator and the second model indicator comprise at least one of the following: a model calculation amount FLOPs or a model parameter quantity Parameters.

25. A perception network architecture search apparatus, comprising:

an obtaining module, configured to obtain a to-be-searched perception network and a target search space, wherein the to-be-searched perception network comprises a backbone network and a header header, the backbone network is connected to the header, the backbone network comprises a first convolutional layer, the header comprises a third convolutional layer, and the target search space comprises a plurality of operation (operation) types; and

an architecture search module, configured to perform architecture search for the first convolutional layer in the target search space, and perform architecture search for the third convolutional layer in the target search space, to obtain a found perception network, wherein a first convolutional layer comprised in the found perception network corresponds to a first operation type, a third convolutional layer comprised in the found perception network corresponds to a third operation type, and the first operation type and the third operation type are operation types in the plurality of operation types.

26. The apparatus according to claim 25, wherein the architecture search module is specifically configured to:

obtain a first sub-search space corresponding to the first convolutional layer, wherein the first sub-search space comprises a part or all of the plurality of operation types; and perform architecture search on the first convolutional layer in the first sub-search space, to obtain the first operation type corresponding to the first convolutional layer, wherein the first operation type is one of operation types comprised in the first sub-search space; and/or obtain a third sub-search space corresponding to the third convolutional layer, wherein the third sub-search space comprises a part or all of the plurality of operation types; and perform architecture search for the third convolutional layer in the third sub-search space, to obtain the third operation type corresponding to the third convolutional layer, wherein the third operation type is one of operation types comprised in the third sub-search space.

27. The apparatus according to claim 26, wherein the architecture search module is specifically configured to: obtain a first weight value that is of each of the plurality of operation types comprised in the target search space and that corresponds to the first convolutional layer, wherein the first weight value indicates a capability of an operation type to influence an output result of the to-be-searched perception network; and obtaining, according to the first weight value corresponding to the first convolutional layer, the first sub-search space corresponding to the first convolutional layer from the target search space.

28. The apparatus according to claim 26 or 27, wherein the architecture search module is specifically configured to: obtain a first weight value that is of each of the plurality of operation types comprised in the target search space that corresponds to the third convolutional layer; and obtain, according to the first weight value corresponding to the third convolutional layer, the third sub-search space corresponding to the third convolutional layer from the target search space.

29. An image processing apparatus, wherein the apparatus comprises:

an obtaining module, configured to obtain a target image; and
a target detection module, configured to perform target detection on the target image by using a perception network, to obtain a detection result, wherein
the perception network comprises a backbone network, a feature pyramid network FPN, and a header header, the backbone network is connected to the FPN, the FPN is connected to the header, the backbone network comprises a first convolutional layer, the FPN comprises a second convolutional layer, the header comprises a third convolutional layer, the first convolutional layer corresponds to a first operation type, the second convolutional layer corresponds to a second operation type, the third convolutional layer corresponds to a third operation type, and a correspondence between the first convolutional layer and the first operation type, a correspondence between the second convolutional layer and the second operation type, and a correspondence between the third convolutional layer and the third operation type are obtained by performing architecture search on a to-be-searched perception network in a target search space; or
the perception network comprises a backbone network and a header header, the backbone network is connected to the header, the backbone network comprises a first convolutional layer, the header comprises a third convolutional layer, the first convolutional layer corresponds to a first operation type, the third convolutional layer corresponds to a third operation type, and a correspondence between the first convolutional layer and the first operation type and a correspondence between the third convolutional layer and the third operation type are obtained by performing architecture search on a to-be-searched perception network in a target search space, wherein

the target search space comprises the first operation type, the second operation type, and the third operation type.

30. The apparatus according to claim 29, wherein when architecture search is performed, a search space corresponding to the first convolutional layer is a first sub-search space;

a search space corresponding to the second convolutional layer is a second sub-search space; or
a search space corresponding to the third convolutional layer is a third sub-search space, wherein
the first sub-search space and the second sub-search space comprise a part or all of the plurality of operation types.

FIG. 1

FIG. 2a

FIG. 2b

Planning and control (obstacle avoidance/ traffic light decision-making/traffic sign decision-making)

Planning and control (obstacle avoidance)

Laser ranging fusion

Automatic parking/image composition positioning

FIG. 3

FIG. 4

100

Data collection device
160

Training sample

Database 130

Training device 120

Main
area

Object
type

Execution
device 110

User
behavior

I/O
interface
112

CNN feature extraction
model

Data storage
system 150

Customer
device 140

Object
type

Calculation module 111

FIG. 5

FIG. 6

FIG. 7

FIG. 8a

300

Execution device 210

Data storage system 250

Communication network

Local device 301

Local device 302

For example:

FIG. 8b

Obtain a to-be-searched perception network and a target search space, where the to-be-searched perception network includes a backbone network, a feature pyramid network FPN, and a header (header), the backbone network is connected to the FPN, the FPN is connected to the header, the backbone network includes a first convolutional layer, the FPN includes a second convolutional layer, the header includes a third convolutional layer, and the target search space includes a plurality of operation types

901

Perform architecture search for the first convolutional layer in the target search space, perform architecture search for the second convolutional layer in the target search space, and perform architecture search for the third convolutional layer in the target search space, to obtain a found perception network, where a first convolutional layer included in the found perception network corresponds to a first operation type, a second convolutional layer included in the found perception network corresponds to a second operation type, a third convolutional layer included in the found perception network corresponds to a third operation type, and the first operation type, the second operation type, and the third operation type are operation types in the plurality of operation types

902

FIG. 9

Backbone network (backbone)

Feature map C4

Feature map C3

Feature map C2

Feature map C1

Convolution
module 4

Convolution
module 3

Convolution
module 2

Convolution
module 1

FIG. 10a

FIG. 10b

FIG. 11

FIG. 12a

FIG. 12b

EP 4 109 343 A1

First convolutional layer/
Second convolutional layer/
Third convolutional layer

Operation type 1

Operation type 2

Operation type 3

⋮

Operation type N

Weighted
averaging

FIG. 13a

Convolutional layer 1

Operation type 1 → y1

Operation type 2 → y2

Operation type 3 → y3

⋮

Operation type N → yN

$y = \alpha_1 y_1 + \alpha_2 y_2 + \ldots + \alpha_N y_N$

Convolutional layer 2

Operation type 1 → Y1

Operation type 2 → Y2

Operation type 3 → Y3

⋮

Operation type N → YN

$Y = \alpha_1 Y_1 + \alpha_2 Y_2 + \ldots + \alpha_N Y_N$

FIG. 13b

Obtain a to-be-searched perception network and a target search space, where the to-be-searched perception network includes a backbone network and a header (header), the backbone network is connected to the header, the backbone network includes a first convolutional layer, the header includes a third convolutional layer, and the target search space includes a plurality of operation types — 1401

Perform architecture search for the first convolutional layer in the target search space, and perform architecture search for the third convolutional layer in the target search space, to obtain a found perception network, where a first convolutional layer included in the found perception network corresponds to a first operation type, a third convolutional layer included in the found perception network corresponds to a third operation type, and the first operation type and the third operation type are operation types in the plurality of operation types — 1402

FIG. 14

Obtaining a target image — 1501

Perform target detection on the target image by using a perception network, to obtain a detection result — 1502

FIG. 15

Receive a first model indicator from a device side | 1601

Perform architecture search on a to-be-searched perception network according to the first model indicator and a preset loss, to obtain a found perception model | 1602

FIG. 16

1701

Obtaining module

1702

Architecture search module

FIG. 17

1801

Obtaining module

1802

Target detection module

FIG. 18

1900

Execution device

Antenna                                                    Antenna

| Receiver 1901 | Transmitter 1902 |

Processor 1903

| Memory 1904 | Application processor 19031 | Communication processor 19032 |

FIG. 19

FIG. 20

FIG. 21

Neural network processing unit 2100

Instruction fetch buffer 2109

Controller 2104

Weight memory 2102

Operation circuit 2103

Accumulator 2108

Input memory 2101

Vector calculation unit 2107

Unified memory 2106

Direct memory access controller 2105

Bus interface unit 2110

Host CPU

External memory

<table>
<tr><td colspan="2" align="center">**INTERNATIONAL SEARCH REPORT**</td><td>International application No.<br>**PCT/CN2021/076984**</td></tr>
</table>

**A.    CLASSIFICATION OF SUBJECT MATTER**

G06N 3/04(2006.01)i;  G06N 3/04(2006.01)i

According to International Patent Classification (IPC) or to both national classification and IPC

**B.    FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 感知, 神经, 网络, 结构, 卷积, 搜索, 主干, 金字塔, perceptual, neural, network, structure, convolution, search, backbone, pyramid

**C.    DOCUMENTS CONSIDERED TO BE RELEVANT**

| Category* | Citation of document, with indication, where appropriate, of the relevant passages | Relevant to claim No. |
|---|---|---|
| PX | CN 111401517 A (HUAWEI TECHNOLOGIES CO., LTD.) 10 July 2020 (2020-07-10)<br>description, paragraphs 174-505 | 1-30 |
| A | CN 109919304 A (TENCENT TECHNOLOGY SHENZHEN CO., LTD.) 21 June 2019<br>(2019-06-21)<br>description, paragraphs 53-70, figure 2 | 1-30 |
| A | CN 110020667 A (GUANGZHOU SHIYUAN ELECTRONIC TECHNOLOGY COMPANY<br>LIMITED) 16 July 2019 (2019-07-16)<br>entire document | 1-30 |
| A | CN 110533180 A (BEIJING SKYLINE ROBOT TECHNOLOGY R & D CO., LTD.) 03<br>December 2019 (2019-12-03)<br>entire document | 1-30 |
| A | US 2019286984 A1 (GOOGLE LLC.) 19 September 2019 (2019-09-19)<br>entire document | 1-30 |

☐ Further documents are listed in the continuation of Box C.      ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **07 May 2021** | **19 May 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/076984**

| Patent document cited in search report | | | Publication date (day/month/year) | Patent family member(s) | Publication date (day/month/year) |
|---|---|---|---|---|---|
| CN | 111401517 | A | 10 July 2020 | None | |
| CN | 109919304 | A | 21 June 2019 | None | |
| CN | 110020667 | A | 16 July 2019 | None | |
| CN | 110533180 | A | 03 December 2019 | None | |
| US | 2019286984 | A1 | 19 September 2019 | None | |

Form PCT/ISA/210 (patent family annex) (January 2015)

**REFERENCES CITED IN THE DESCRIPTION**

**Patent documents cited in the description**

• CN 202010109254